(19) Europäisches Patentamt
European Patent Office
Office européen des brevets

(11) EP 3 129 423 B1

(12) **EUROPEAN PATENT SPECIFICATION**

(45) Date of publication and mention of the grant of the patent:
**25.05.2022 Bulletin 2022/21**

(21) Application number: **15725880.7**

(22) Date of filing: **09.04.2015**

(51) International Patent Classification (IPC):
***C08G 64/42*** *(2006.01)*

(52) Cooperative Patent Classification (CPC):
**C08G 64/42**

(86) International application number:
**PCT/IB2015/052605**

(87) International publication number:
**WO 2015/155737 (15.10.2015 Gazette 2015/41)**

(54) **A SYSTEM AND PROCESS FOR PRODUCING VARIOUS MOLECULAR WEIGHT MELT POLYCARBONATES**

SYSTEM UND VERFAHREN ZUR ERZEUGUNG VERSCHIEDENER MOLEKULARGEWICHT-SCHMELZPOLYCARBONATE

SYSTÈME ET PROCÉDÉ DE PRODUCTION DE POLYCARBONATES PAR FUSION DE POIDS MOLÉCULAIRES DIFFÉRENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.04.2014 EP 14382138**

(43) Date of publication of application:
**15.02.2017 Bulletin 2017/07**

(73) Proprietor: **SABIC Global Technologies B.V.**
**4612 PX Bergen op Zoom (NL)**

(72) Inventor: **FERNANDEZ, Ignacio Vic**
**30390 La Aljorra (Cartagena) (ES)**

(74) Representative: **Sabic Intellectual Property Group**
**Sabic Intellectual Property Department**
**P.O. Box 3008**
**6160 GA Geleen (NL)**

(56) References cited:
**EP-A1- 2 540 758** **EP-A1- 2 692 766**
**US-A- 5 414 057**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

This application relates to a continuous process for making melt polycarbonate and especially relates to a continuous process for making a variety of molecular weights of melt polycarbonate.

## BACKGROUND

In the industry, when changing the molecular weight of a polymerized polycarbonate, a continuous melt polymerization plant requires the adjustment of many polymerization parameters. For example, a high molecular weight polycarbonate is prepared under conditions of higher temperature and higher residence time as compared to a lower molecular weight polycarbonate. Accordingly, when switching from one molecular weight polycarbonate to another molecular weight polycarbonate, the following parameters are changed: molar ratio of the carbonate source to the dihydroxy monomer, the reaction temperatures in the oligomerization reactors, reaction temperatures in the polymerization reactors, the amount of alpha catalyst, and the overall throughput of the plant (residence time). This changeover can take several hours, where, during the several hour changeover from one molecular weight polycarbonate to another molecular weight polycarbonate, a large amount of waste polycarbonate is produced. This problem is increasingly an issue as the size of melt polymerization plants increases. For example, in a large melt polymerization plant that produces greater than 100,000 tons per year (t/y), a large amount of waste is undesirably produced during a changeover. As a result, the development of larger polycarbonate plants is hampered by the inefficiencies of the changeover process.

Furthermore, since the operating conditions for the production of high molecular weight polycarbonates are generally more severe (for example, increased catalyst levels, increased temperature, and increased residence time), the changeover from a higher to a lower molecular weight polycarbonate can result in a high branching level in the lower molecular weight polycarbonate (e.g., greater than 800 parts per million by weight (ppm)). Although such levels can be acceptable in high molecular weight polycarbonates, this high branching level in low molecular weight polycarbonates yields poor impact properties (e.g., poor ductility).

Accordingly, improved methods for preparing polycarbonates are therefore desired, where changeover between different molecular weight polycarbonates is simplified and/or the production of polycarbonate waste is reduced.

EP2692766 discloses a method for producing polycarbonate by melt polymerization comprising: (a) adding acetone, diaryl carbonate, and dihydroxy compound to the melt polymerization unit, wherein the acetone is added to the melt polymerization unit as a mixture with the diaryl carbonate and/or the dihydroxy compound; (b) adding a catalyst to the melt polymerization unit, optionally without separating out acetone prior to the addition of the catalyst; and (c) operating the melt polymerization unit under conditions so that the dihydroxy compound reacts with the diaryl carbonate to produce polycarbonate with a desired specification, and a phenol byproduct.

US5414057 discloses a process for the redistribution of an organic polycarbonate composition involving melt equilibrating a starting polycarbonate composition (which may be a single polycarbonate or a mixture of polycarbonates, and may be or include recycled polycarbonate) having an initial weight average molecular weight in the presence of a carbonate redistribution catalyst and in the absence of branching agents, under conditions such that a redistributed polycarbonate composition is formed having a weight average molecular weight different from, and typically lower than, the initial weight.

EP2540758 discloses a a melt polymerization reactor system and method of producing polycarbonate using a late-addition catalyst formulation having a melt transesterification catalyst dispersed in a liquid carrier system which preferably includes less than 10 wt% water.

## SUMMARY OF THE INVENTION

Claimed herein is

a continuous melt polymerization process comprising: melt polymerizing a carbonate compound and dihydroxy compound in the presence of a catalyst composition to form a polymerized polycarbonate, wherein the catalyst composition comprises an alkali catalyst comprising a source of alkali and/or alkaline earth ions and/or a quaternary catalyst; and after a final polymerization, adding a chain scission agent to the polymerized polycarbonate to reduce the molecular weight of the polymerized polycarbonate to form a modified polycarbonate having a molecular weight that is less than the molecular weight of the polymerized polycarbonate; wherein the modified polycarbonate has a branching level that is the same or lower than a branching level of the polymerized polycarbonate.

The above described and other features are exemplified by the following figure and detailed description.

## BRIEF DESCRIPTION OF THE DRAWINGS

Refer now to the figure, which is an exemplary aspect of the disclosure, and wherein the like elements are numbered alike.

FIG. 1 illustrates a process of adding a chain scission agent to a melt polymerization of polycarbonate.

## DETAILED DESCRIPTION

When adjusting the molecular weight of a polycarbonate in a continuous melt polymerization, the process conditions such as one or more of a monomer flow rate, a catalyst flow rate, a polymerization temperature, a polymerization pressure, and plant throughput are adjusted. The transition time in changing over production to the desired molecular weight polycarbonate can take as many as several hours, resulting in the production of a large amount of waste polycarbonate and/or polycarbonate that does not meet the desired specifications, also referred to herein as off-spec polycarbonate.

The Applicants therefore developed a continuous process for producing different molecular weight melt polycarbonates in a production line, without changing the processing conditions. In other words, the processing conditions (such as pressures, temperatures, carbonate compound flow rate, dihydroxy compound flow rate, and catalyst flow rate) can remain the same (i.e., they only fluctuate within normal operating parameters for making a single molecular weight polycarbonate and can specifically vary within 5%, specifically, 1% of a specific value or of a set of values), yet various desired molecular weight polycarbonates are produced. Specifically, the process involves producing a higher molecular weight polycarbonate at all times in the polymerization system. In other words, the processing conditions are not adjusted to attain a different molecular weight polycarbonate, but remain set to produce a high molecular weight polycarbonate. After the final polymerization, if a different molecular weight polycarbonate is desired, the molecular weight is reduced to the desired molecular weight (e.g., a final molecular weight) using a chain scission agent that acts to break the polymer chains and modify the molecular weight or the molecular weight is increased to a desired molecular weight by adding a branching agent.

For example, a melt polymerization can operate at a set of conditions (for example, of temperature, pressure, residence time, catalyst concentration, monomer flow rate, or a combination comprising one or more of the foregoing, e.g., of temperature, pressure, residence time, and catalyst concentration) that remain within 5%, specifically, 1% of their set values prior to, during, and after the molecular weight adjustment. For example, the melt polymerization process can be operated at conditions such that the polymerized polycarbonate has a melt volume flow rate (MVR) of less than or equal to 7 cubic centimeters per 10 minutes ($cm^3$/10 min), specifically, 3 to 7 $cm^3$/10 min measured at 300 degrees Celsius (°C) under a load of 1.2 kilograms (kg) according to ASTM D1238-04 prior to the addition of the chain scission agent (i.e., but for the addition of the chain scission agent, the MVR is less than or equal to 7 $cm^3$/10 min, specifically, 3 to 7 $cm^3$/10 min). The chain scission agent can be added to the polymerized polycarbonate to result in a modified polycarbonate with an MVR of greater than 4 $cm^3$/10 min, specifically, 4 to 200 $cm^3$/10 min, specifically, 7 to 150 $cm^3$/10 min measured at 300°C under a load of 1.2 kg according to ASTM D1238-04. In this manner, the set of processing conditions does not change, but the molecular weight of the polycarbonate is easily adjusted merely by the introduction of a chain scission agent. In terms of molecular weight, the continuous melt polymerization process can be operated at conditions such that the polymerized polycarbonate has a weight average molecular weight (Mw) of greater than 50,000 Daltons, specifically, greater than or equal to 56,000 Daltons, based on a polystyrene standard prior to the addition of the chain scission agent. In other words, but for the addition of the chain scission agent, the Mw of the polymerized polycarbonate is greater than 50,000 Daltons, specifically, greater than or equal to 56,000 Daltons. After the addition of the chain scission agent, the Mw of the polymerized polycarbonate can be reduced to result in a modified polycarbonate with a weight average molecular weight of less than 50,000 Daltons. The branching level of the polymerized polycarbonate and the modified polycarbonate can be less than or equal to 500 ppm. The branching level of the polymerized polycarbonate and the modified polycarbonate can be greater than or equal to 500 ppm. According to the instant invention, the branching level of the modified polycarbonate is less than or equal to the branching level of the polymerized polycarbonate.

The present process can be especially beneficial in a large production facility with a production rate of greater than or equal to 65,000 t/y, specifically, greater than or equal to 100,000 t/y. For example, in a large production facility with a production rate of 65,000 t/y, a standard changeover time to change product MVR from 6 to 65 $cm^3$/10 min of 4.5 hours would result in 50 tons of waste and/or off-spec polycarbonate per transition. Reducing the changeover time to 0.5 hour reduces the amount of waste and/or off-spec polycarbonate generated by a factor of ten to only 5 tons of waste polycarbonate per transition and further reducing the changeover time to 0.2 hour reduces the amount of waste generated to only 1.7 tons of waste polycarbonate per transition. Hence, significant savings and improvements can be realized with the present process, which is especially evident in large scale melt polycarbonate production plants, e.g., greater than 55,000 t/y, specifically, greater than or equal to 100,000 t/y, more specifically, greater than or equal to 200,000 t/y (91 Mg/day), and even more specifically, greater than or equal to 300,000 t/yr.

"Polycarbonate" as used herein means a polymer having repeating structural carbonate units of formula (1)

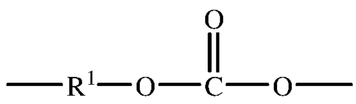

(1)

in which at least 60 percent of the total number of $R^1$ groups contain aromatic moieties and the balance thereof are aliphatic, alicyclic, or aromatic. Each $R^1$ can be a $C_{6-30}$ aromatic group, that is, contains at least one aromatic moiety. $R^1$ can be derived from an aromatic dihydroxy compound of the formula $HO-R^1-OH$, in particular of formula (2)

$$HO-A^1-Y^1-A^2-OH \qquad (2)$$

wherein each of $A^1$ and $A^2$ is a monocyclic divalent aromatic group and $Y^1$ is a single bond or a bridging group having one or more atoms that separate $A^1$ from $A^2$. One atom can separate $A^1$ from $A^2$. Specifically, each $R^1$ can be derived from a bisphenol of formula (3)

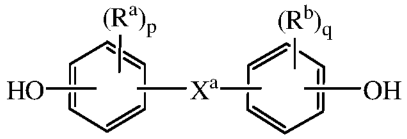

(3)

wherein $R^a$ and $R^b$ are each independently a halogen, $C_{1-12}$ alkoxy, or $C_{1-12}$ alkyl; and p and q are each independently integers of 0 to 4. It will be understood that when p or q is less than 4, the valence of each carbon of the ring is filled by hydrogen. Also in formula (3), $X^a$ is a bridging group connecting the two hydroxy-substituted aromatic groups, where the bridging group and the hydroxy substituent of each $C_6$ arylene group are disposed ortho, meta, or para (specifically para) to each other on the $C_6$ arylene group. The bridging group $X^a$ can be a single bond, -O-, -S-, -S(O)-, $-S(O)_2-$, -C(O)-, or a $C_{1-18}$ organic group. The $C_{1-18}$ organic bridging group can be cyclic or acyclic, aromatic or non-aromatic, and can further comprise heteroatoms such as halogens, oxygen, nitrogen, sulfur, silicon, or phosphorous. The $C_{1-18}$ organic group can be disposed such that the $C_6$ arylene groups connected thereto are each connected to a common alkylidene carbon or to different carbons of the $C_{1-18}$ organic bridging group. Each p and q can be 1, and $R^a$ and $R^b$ can each be a $C_{1-3}$ alkyl group, specifically methyl, disposed meta to the hydroxy group on each arylene group.

$X^a$ can be a substituted or unsubstituted $C_{3-18}$ cycloalkylidene, a $C_{1-25}$ alkylidene of formula $-C(R^c)(R^d)-$ wherein $R^c$ and $R^d$ are each independently hydrogen, $C_{1-12}$ alkyl, $C_{1-12}$ cycloalkyl, $C_{7-12}$ arylalkyl, $C_{1-12}$ heteroalkyl, or cyclic $C_{7-12}$ heteroarylalkyl, or a group of the formula $-C(=R^e)-$ wherein $R^e$ is a divalent $C_{1-12}$ hydrocarbon group. Groups of this type include methylene, cyclohexylmethylene, ethylidene, neopentylidene, and isopropylidene, as well as 2-[2.2.1]-bicycloheptylidene, cyclohexylidene, cyclopentylidene, cyclododecylidene, and adamantylidene.

$X^a$ can be a $C_{1-18}$ alkylene, a $C_{3-18}$ cycloalkylene, a fused $C_{6-18}$ cycloalkylene, or a group of the formula $-B^1-G-B^2-$ wherein $B^1$ and $B^2$ are the same or different $C_{1-6}$ alkylene and G is a $C_{3-12}$ cycloalkylidene or a $C_{6-16}$ arylene. For example, $X^a$ can be a substituted $C_{3-18}$ cycloalkylidene of formula (4)

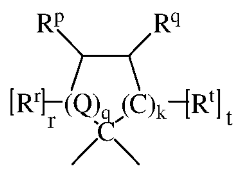

(4)

wherein $R^r$, $R^p$, $R^q$, and $R^t$ are each independently hydrogen, halogen, oxygen, or $C_{1-12}$ hydrocarbon groups; Q is a direct bond, a carbon, or a divalent oxygen, sulfur, or -N(Z)-where Z is hydrogen, halogen, hydroxy, $C_{1-12}$ alkyl, $C_{1-12}$ alkoxy, or $C_{1-12}$ acyl; r is 0 to 2, t is 1 or 2, q is 0 or 1, and k is 0 to 3, with the proviso that at least two of $R^r$, $R^p$, $R^q$, and $R^t$ taken together are a fused cycloaliphatic, aromatic, or heteroaromatic ring. It will be understood that where the fused ring is aromatic, the ring as shown in formula (4) will have an unsaturated carbon-carbon linkage where the ring is fused. When k is one and i is 0, the ring as shown in formula (4) contains 4 carbon atoms, when k is 2, the ring as shown in formula (4) contains 5 carbon atoms, and when k is 3, the ring contains 6 carbon atoms. Two adjacent groups (e.g., $R^q$ and $R^t$ taken together) can form an aromatic group, and $R^q$ and $R^t$ taken together can form one aromatic group and $R^r$ and $R^p$ taken together can form a second aromatic group. When $R^q$ and $R^t$ taken together form an aromatic group, $R^p$

can be a double-bonded oxygen atom, i.e., a ketone.

Bisphenols wherein $X^a$ is a cycloalkylidene of formula (4) can be used in the manufacture of polycarbonates containing phthalimidine carbonate units of formula (1a)

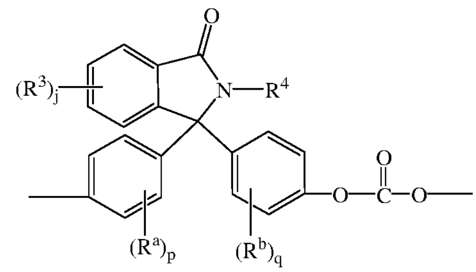

(1a)

wherein $R^a$, $R^b$, p, and q are as in formula (3), $R^3$ is each independently a $C_{1-6}$ alkyl, j is 0 to 4, and $R_4$ is hydrogen, $C_{1-6}$ alkyl, or a substituted or unsubstituted phenyl, for example a phenyl substituted with up to five $C_{1-6}$ alkyls. For example, the phthalimidine carbonate units are of formula (1b)

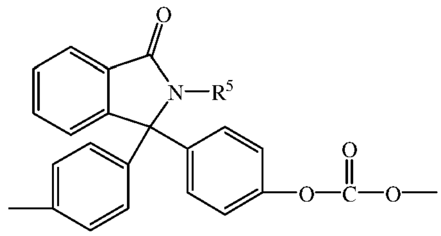

(1b)

wherein $R^5$ is hydrogen, phenyl optionally substituted with up to five 5 $C_{1-6}$ alkyls, or $C_{1-4}$ alkyl. In formula (1b), $R^5$ can be hydrogen, methyl, or phenyl, specifically phenyl. Carbonate units (1b) wherein $R^5$ is phenyl can be derived from 2-phenyl-3,3'-bis(4-hydroxy phenyl)phthalimidine (also known as 3,3-bis(4-hydroxyphenyl)-2-phenylisoindolin-1-one, or N-phenyl phenolphthalein bisphenol ("PPPBP")).

Other bisphenol carbonate repeating units of this type are the isatin carbonate units of formula (1c) and (1d)

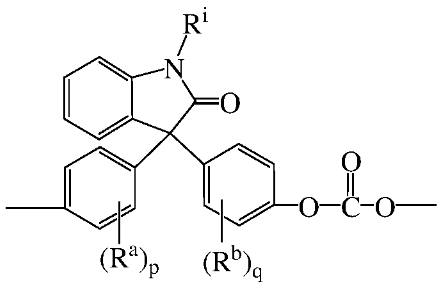

(1c)

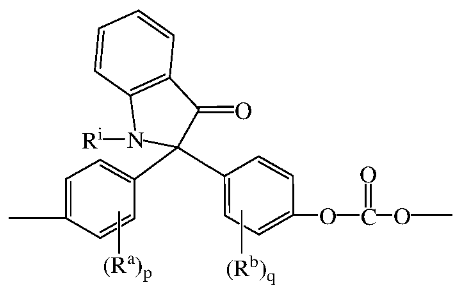

(1d)

wherein $R^a$ and $R^b$ are each independently $C_{1-12}$ alkyl, p and q are each independently 0 to 4, and $R^1$ is $C_{1-12}$ alkyl, phenyl, optionally substituted with 1 to 5 $C_{1-10}$ alkyl, or benzyl optionally substituted with 1 to 5 $C_{1-10}$ alkyl. Each $R^a$ and $R^b$ can be methyl, p and q can each independently be 0 or 1, and $R^1$ is $C_{1-4}$ alkyl or phenyl.

Other examples of bisphenol carbonate units derived from bisphenols (3) wherein $X^a$ is a substituted or unsubstituted $C_{3-18}$ cycloalkylidene (4) include the cyclohexylidene-bridged, alkyl-substituted bisphenol of formula (1e)

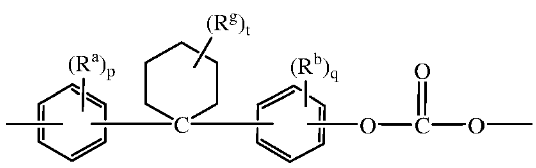

(1e)

wherein $R^a$ and $R^b$ are each independently $C_{1-12}$ alkyl, $R^g$ is $C_{1-12}$ alkyl, p and q are each independently 0 to 4, and t is

0 to 10. At least one of each of $R^a$ and $R^b$ can be disposed meta to the cyclohexylidene bridging group. Each $R^a$ and $R^b$ can independently be $C_{1-4}$ alkyl, $R^g$ is $C_{1-4}$ alkyl, p and q are each 0 or 1, and t is 0 to 5. $R^a$, $R^b$, and $R^g$ can each be methyl, p and q can each be 0 or 1, and t can be 0 or 3, specifically 0.

Examples of other bisphenol carbonate units derived from bisphenol (3) wherein $X^a$ is a substituted or unsubstituted $C_{3-18}$ cycloalkylidene include adamantyl units of formula (If) and fluorenyl units of formula (1g)

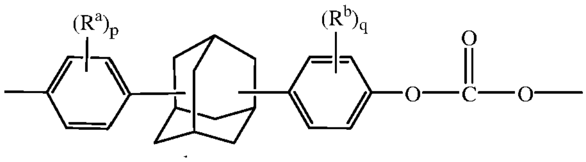

(1f)

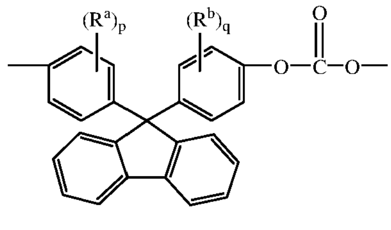

(1g)

wherein $R^a$ and $R^b$ are each independently $C_{1-12}$ alkyl, and p and q are each independently 1 to 4. At least one of each of $R^a$ and $R^b$ can be disposed meta to the cycloalkylidene bridging group. $R^a$ and $R^b$ can each be independently $C_{1-3}$ alkyl, and p and q can be each 0 or 1; specifically, $R^a$, $R^b$ can each be methyl, p and q are each 0 or 1, and when p and q are 1, the methyl group can be disposed meta to the cycloalkylidene bridging group. Carbonates containing units (1a) to (1g) are useful for making polycarbonates with high glass transition temperatures (Tg) and high heat distortion temperatures.

Other useful dihydroxy compounds of the formula HO-$R^1$-OH include aromatic dihydroxy compounds of formula (6)

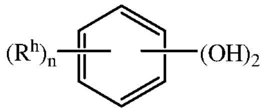

(6)

wherein each $R^h$ is independently a halogen atom, $C_{1-10}$ hydrocarbyl group such as a $C_{1-10}$ alkyl, a halogen-substituted $C_{1-10}$ alkyl, a $C_{6-10}$ aryl, or a halogen-substituted $C_{6-10}$ aryl, and n is 0 to 4. The halogen is usually bromine.

Some illustrative examples of specific dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or combinations comprising at least one of the foregoing dihydroxy compounds.

Specific examples of bisphenol compounds of formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations comprising at least one of the foregoing dihydroxy compounds can also be used. The polycarbonate can be a linear homopolymer derived from bisphenol A, in which each of $A^1$ and $A^2$ is p-phenylene and $Y^1$ is isopropylidene in formula (3).

The polycarbonate is prepared via the melt polymerization of a bisphenol and a carbonate precursor also referred to herein as a carbonate compound. Exemplary carbonate precursors include a carbonyl halide such as carbonyl bromide or carbonyl chloride (phosgene), a bishaloformate of a dihydroxy compound (e.g., the bischloro formate of bisphenol A, hydroquinone ethylene glycol, neopentyl glycol, or the like), diaryl carbonates, or a combination comprising at least one of the foregoing. The diaryl carbonate ester can be diphenyl carbonate, or an activated diphenyl carbonate having electron-withdrawing substituents on each aryl, such as bis(4-nitrophenyl)carbonate, bis(2-chlorophenyl)carbonate, bis(4-chlorophenyl) carbonate, bis(methyl salicyl)carbonate, bis(4-methylcarboxylphenyl) carbonate, bis(2-acetylphenyl) carboxylate, bis(4-acetylphenyl) carboxylate, or a combination comprising at least one of the foregoing.

The present polymerization can occur in the presence of a branching agent. Examples of branching agents include polyfunctional organic compounds containing at least three functional groups selected from hydroxyl, carboxyl, carboxylic anhydride, haloformyl, and mixtures of the foregoing functional groups. Such branching agents include aromatic triacyl halides, for example triacyl chlorides of formula (20)

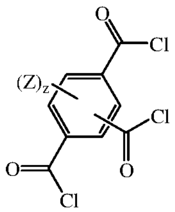

(20)

wherein Z is a halogen, $C_{1-3}$ alkyl, $C_{1-3}$ alkoxy, $C_{7-12}$ arylalkylene, $C_{7-12}$ alkylarylene, or nitro, and z is 0 to 3; a tri-substituted phenol of formula (21)

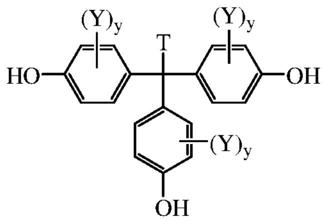

(21)

wherein T is a $C_{1-20}$ alkyl, $C_{1-20}$ alkoxy, $C_{7-12}$ arylalkyl, or $C_{7-12}$ alkylaryl, Y is a halogen, $C_{1-3}$ alkyl, $C_{1-3}$ alkoxy, $C_{7-12}$ arylalkyl, $C_{7-12}$ alkylaryl, or nitro, s is 0 to 4.

Specific examples of branching agents include trimellitic acid, trimellitic anhydride, trimellitic trichloride, tris-p-hydroxyphenylethane, isatin-bis-phenol of formula (22)

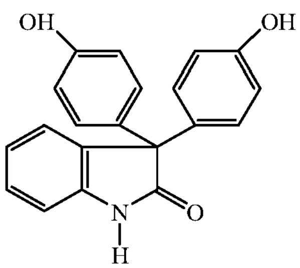

(22),

tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid.

In the continuous melt polymerization process, the polycarbonate can be prepared by co-reacting, in a molten

state, a dihydroxy reactant and a carbonate precursor in the presence of a transesterification catalyst. The reaction can be carried out in typical polymerization equipment, such as a continuously stirred reactor (CSTR), plug flow reactor, wire wetting fall polymerizers, free fall polymerizers, horizontal polymerizers, wiped film polymerizers, BANBURY mixers, single or twin screw extruders, or a combination comprising one or more of the foregoing. Volatile monohydric phenol is removed from the molten reactants by distillation and the polymer is isolated as a molten residue. Melt polymerization can be conducted as a batch process or as a continuous process. In either case, the melt polymerization conditions used can comprise two or more distinct reaction stages. For example, the polymerization can comprise a first reaction stage, also referred to as an oligomerization stage, in which the starting dihydroxy aromatic compound and diaryl carbonate are converted into an oligomeric polycarbonate and a second reaction stage, also referred to as a polymerization stage, wherein the oligomeric polycarbonate formed in the first reaction stage is converted to high molecular weight polycarbonate. The oligomerization stage can comprise 1 or more, specifically, 2 or more, more specifically, 2 to 4 oligomerization units (for example 2 to 4 continuously stirred tanks). When 2 or more oligomerization units are present in series, one or both of an increase in temperature or a decrease in pressure can occur from one unit to the next. The polymerization stage can comprise 1 or more, specifically, 2 or more, more specifically, 2 polymerization units (for example 2 horizontal or wire wetting fall polymerizers). When the polymerization stage comprises 2 polymerization units, the first polymerization unit can polymerize the polycarbonate to a molecular weight of, for example, 20,000 to 50,000 Daltons, the polycarbonate composition can then be optionally quenched, and a second polymerization unit can function as a devolitalization unit, where the molecular weight of the polycarbonate does not significantly increase (for example, the molecular weight does not increase by greater than 10 weight percent (wt%)) and a temperature, a pressure, and a residence time are used to reduce the concentration of low molecular weight components (such as those with a molecular weight of less than 1,000 Daltons). An oligomerization stage polymerization unit is herein defined as a polymerization unit that results in polycarbonate oligomers with a number average molecular weight of less than or equal to 8,000 Daltons and a polymerization stage polymerization unit is herein defined as a polymerization unit that produces polycarbonate with a number average molecular weight of greater than 8,000 Daltons. It is noted that while less than or equal to 8,000 Daltons is used here to define a molecular weight achieved in the first stage, one skilled in the art readily understands that said molecular weight is used to define an oligomerization stage, where the oligomer molecular weight could be greater than 8,000 Daltons. A "staged" polymerization reaction condition can be used in continuous polymerization systems, wherein the starting monomers are oligomerized in a first reaction vessel and the oligomeric polycarbonate formed therein is continuously transferred to one or more downstream reactors in which the oligomeric polycarbonate is converted to high molecular weight polycarbonate. Typically, in the oligomerization stage the oligomeric polycarbonate produced has a number average molecular weight of 1,000 to 7,500 Daltons. In one or more subsequent polymerization stages the number average molecular weight (Mn) of the polycarbonate can be increased to, for example, 8,000 and 25,000 Daltons (using polycarbonate standard), specifically, 13,000 to 18,000 Daltons.

Typically, solvents are not used in the process, and the reactants dihydroxy aromatic compound and the diaryl carbonate are in a molten state. The reaction temperature can be 100 to 350 °C, specifically, 180 to 310°C. The pressure can be at atmospheric pressure, supra-atmospheric pressure, or a range of pressures from atmospheric pressure to 15 torr in the initial stages of the reaction, and at a reduced pressure at later stages, for example 0.2 to 15 torr. Likewise, the polymerization can occur in a series of polymerization vessels that can each individually have increasing temperature and/or vacuum. For example, an oligomerization stage can occur at a temperature of 100 to 280°C, specifically, 140 to 240°C and a polymerization stage can occur at a temperature of 240 to 350°C, specifically, 280 to 300°C or 240 to 270°C or 250 to 310°C, where the temperature in the polymerization stage is greater than the temperature in the oligomerization stage. The reaction time from an initial oligomerization unit to a final polymerization unit is generally 0.1 to 15 hours. One or more oligomerization units in the oligomerization stage can each independently be at a pressure of greater than or equal to 100 millibars absolute (mbara). When the oligomerization stage comprises more than one oligomerization units, a first oligomerization unit can have a pressure of greater than or equal to 100 mbara and a second oligomerization unit can have a pressure of 15 to 90 mbara, where the first oligomerization unit is upstream of the second oligomerization unit, where one or more first stage oligomerization units can be located before, in between, and/or after said oligomerization units.

After a final polymerization vessel (also referred to as a final polymerization unit), the polymer can be introduced to a reactor, extruded, subjected to filtration in a melt filter, devolatilized, or a combination comprising one or more of the foregoing. It is noted that the melt filter can be located before or after the extruder. For example, the melt polymerization process for the manufacture of a polycarbonate composition can comprise: melt polymerizing a dihydroxy reactant and a carbonate compound to produce a molten reaction product; quenching the molten reaction product; filtering the molten reaction product in a melt filter upstream of any extruders; optionally, introducing an additive to form a mixture; and extruding the mixture to form the polycarbonate composition. Likewise, the melt polymerization process for the manufacture of a polycarbonate composition can comprise: melt polymerizing a dihydroxy reactant and a carbonate compound to produce a molten reaction product; introducing a quencher composition and optionally an additive for form a mixture; and extruding the mixture to form the polycarbonate composition.

The polymerized polycarbonate can have an endcap level of greater than or equal to 60%, specifically, greater than or equal to 70%, more specifically, greater than or equal to 80%. The endcap level can be determined according to the formula:

$$\%EC = 100 - (\text{ppm OH} + \text{Snell Mn})/340{,}000$$

wherein the ppm OH of each sample was measured by FTIR (Perkin Elmer FTIR Spectrum One equipment), dissolving 0.5 grams of the sample in 25 milliliters of dried chloroform. The ppm of OH were calculated measuring the absorbance at 3,584 $cm^{-1}$, using a univariable calibration, normalizing the absorbance by diving it by the 2,779 $cm^{-1}$ absorbance.

Catalysts used in the melt transesterification polymerization production of polycarbonates can include alpha (also referred to herein as an alkali catalyst) and/or beta catalysts (also referred to herein as quaternary catalysts). Beta catalysts are typically volatile and degrade at elevated temperatures. Beta catalysts can therefore be used at early low-temperature polymerization stages. Alpha catalysts are typically more thermally stable and less volatile than beta catalysts.

The alpha catalyst can comprise a source of alkali and/or alkaline earth ions. The sources of these ions include alkali metal hydroxides such as lithium hydroxide, sodium hydroxide, and potassium hydroxide, as well as alkaline earth hydroxides such as magnesium hydroxide and calcium hydroxide. Other possible sources of alkali and alkaline earth metal ions include the corresponding salts of carboxylic acids (such as sodium acetate) and derivatives of ethylene diamine tetraacetic acid (EDTA) (such as EDTA tetrasodium salt, and EDTA magnesium disodium salt). Other alpha transesterification catalysts include alkali or alkaline earth metal salts of carbonate, such as $Cs_2CO_3$, $NaHCO_3$, and $Na_2CO_3$, and the like, non-volatile inorganic acid such as $NaH_2PO_3$, $NaH_2PO_4$, $Na_2HPO_3$, $KH_2PO_4$, $CsH_2PO_4$, $Cs_2HPO_4$, and the like, or mixed salts of phosphoric acid, such as $NaKHPO_4$, $CsNaHPO_4$, $CsKHPO_4$, and the like. Combinations comprising at least one of any of the foregoing catalysts can be used.

The alpha catalyst can be a reduced branching activity or low branching alpha catalyst. As used herein, a "reduced branching activity alpha catalyst" refers to an alpha catalyst comprising a first alpha catalyst and a second alpha catalyst and/or any reaction product thereof and wherein the reduced alpha catalyst has a reduced branching activity as compared to an alpha catalyst consisting of only the first alpha catalyst. For example, the reduced branching activity alpha catalyst can have a reduced Fries rearrangement activity as compared to an alpha catalyst consisting of only the first alpha catalyst under the same melt polymerization conditions in the melt polymerization of polycarbonate.

The alpha catalyst (or first alpha catalyst) can comprise a source of alkali or alkaline earth ions, where the total amount of alkali ions and alkaline earth ions present therein is herein referred to as the "first element," where the first element is the total amount of lithium, sodium, potassium, cesium, rubidium, magnesium, calcium, and strontium present from the first alpha catalyst. Sources of these ions include alkali metal hydroxides such as lithium hydroxide, sodium hydroxide, barium hydroxide, strontium hydroxide, and potassium hydroxide, as well as alkaline earth hydroxides such as magnesium hydroxide and calcium hydroxide. Other possible sources of alkali and alkaline earth metal ions include the corresponding salts of carboxylic acids (such as sodium acetate, potassium acetate, lithium acetate, calcium acetate, barium acetate, magnesium acetate, and strontium acetate) and derivatives of ethylene diamine tetra acetic acid (EDTA) (such as EDTA tetra sodium salt, and EDTA magnesium disodium salt). This alpha catalyst can comprise alkali or alkaline earth metal salts of carbonate, such as $Cs_2CO_3$, sodium bicarbonate ($NaHCO_3$), sodium carbonate ($Na_2CO_3$), potassium bicarbonate, lithium bicarbonate, calcium bicarbonate, barium bicarbonate, magnesium bicarbonate, strontium bicarbonate, potassium carbonate, lithium carbonate, calcium carbonate, barium carbonate, magnesium carbonate, strontium carbonate, and the like. This alpha catalyst can comprise lithium stearate, sodium stearate, strontium stearate, potassium stearate, lithium hydroxyborate, sodium hydroxyborate, sodium phenoxyborate, sodium benzoate, potassium benzoate, lithium benzoate, disodium hydrogen phosphate, dipotassium hydrogen phosphate, dilithium hydrogen phosphate, disodium salts of bisphenol A, dipotassium salts of bisphenol A, and dilithium salts of bisphenol A, sodium salts of phenol, potassium salts of phenol, lithium salts of phenol, or a combination comprising one or more of the foregoing. This alpha catalyst can comprise a combination comprising one or more of the foregoing first alpha catalysts.

The second alpha catalyst comprises a non-volatile inorganic acid, where the term "non-volatile" as used herein means that the acid from which the catalyst is made has no appreciable vapor pressure under melt polymerization conditions. Examples of non-volatile acids include phosphorous acid, phosphoric acid, sulfuric acid, and metal "oxo acids" such as the oxo acids of germanium, antimony, niobium and the like. Salts of non-volatile acids include alkali metal salts of phosphites; alkaline earth metal salts of phosphites; alkali metal salts of phosphates; alkaline earth metal salts of phosphates; alkali metal salts of sulfates; alkaline earth metal salts of sulfates; alkali metal salts of metal oxo acids; and alkaline earth metal salts of metal oxo acids. Specific examples of salts of non-volatile acids include $NaH_2PO_3$, $NaH_2PO_4$, $Na_2HPO_4$, $KH_2PO_4$, $CsH_2PO_4$, $Cs_2HPO_4$, $NaKHPO_4$, $NaCsHPO_4$, $KCsHPO_4$, $Na_2SO_4$, $NaHSO_4$, $NaSbO_3$, $LiSbO_3$, $KSbO_3$, $Mg(SbO_3)_2$, $Na_2GeO_3$, $K_2GeO_3$, $Li_2GeO_3$, $MgGeO_3$, $Mg_2GeO_4$, and combinations comprising one or more of the foregoing compounds. The second alpha catalyst comprises a second element, where the second element

is equal to the total amount of alkali ions, alkaline earth ions, and metal ions present from the second alpha catalyst, for example, sodium, potassium, cesium, lithium, antimony, magnesium, and germanium.

The reduced branching activity alpha catalyst can, for example, comprise a mixture of a first alpha catalyst of NaOH and second alpha catalyst of $KH_2PO_4$. Such a catalyst is referred to herein as $KNaHPO_4$. The reduced activity alpha catalyst can have a molar ratio of the first element to the second element (for example, of the Na from NaOH to K from $KH_2PO_4$) of 0.5 to 1.5, specifically, 0.7 to 1.2.

The reduced activity alpha catalyst can be prepared by first dissolving a second alpha catalyst in water to form a first solution. The first solution can comprise, for example, 100 to 4,000, specifically, 1,500 to 2,000 grams of the second alpha catalyst in 20 liters of water. Meanwhile, a second solution can be prepared by dissolving a first alpha catalyst in water and allowing the second solution to cool. The second solution can comprise 50 to 3,000, specifically, 800 to 950 grams of the first alpha catalyst 50 wt% solution in 1 liter of water. The second solution is then added to the first solution to form the reduced alpha catalyst solution. The reduced alpha catalyst solution can be titrated to confirm that the reduced alpha catalyst solution comprises 0 to 20,000, specifically, 100 to 10,000 ppm, for example, 6,458 of free second catalyst, for example, free $KH_2PO_4$. The reduced alpha catalyst solution can be combined with additional water, for example, with 500 to 4,000 kg, specifically, 1,000 to 1,500 kg of water in an alpha catalyst tank prior to addition to the polymerization unit. The feed rate of the diluted solution can be 0.1 to 10, specifically, 1 to 5 kilograms per hour (kg/h) into the polymerization unit based on a total monomer feed (i.e. the reactant feed) of 10,000 to 20,000 kg/h, specifically, 12,000 to 15,000 kg/h into the polymerization unit and a total bisphenol A feed rate of 5,000 to 9,000 kg/h of dihydroxy monomer to the polymerization unit. For example, the flow rate of the diluted solution can be 0.1 to 10 kg/h, specifically, 1 to 5 kg/h, more specifically, 2 to 3 kg/h into the polymerization unit based on a total monomer feed of 14,200 kg/h, wherein 7,250 kg/h of the monomer feed is a dihydroxy monomer. The diluted solution can be added to a monomer stream to form a catalyst stream and adding the catalyst stream to a polymerization unit. Likewise, a diluted solution can be added to a polymerization at any stage in the polymerization, for example, upstream of, and/or directly to, and/or after a monomer mixing unit; and/or upstream of, and/or directly to, and/or after a polymerization unit (for example, to a first stage polymerization unit and/or after the second reaction stage polymerization unit).

Possible beta catalysts can comprise a quaternary ammonium compound, a quaternary phosphonium compound, or a combination comprising at least one of the foregoing. The quaternary ammonium compound can be a compound of the structure $(R^4)_4N^+X^-$, wherein each $R^4$ is the same or different, and is a $C_{1-20}$ alkyl, a $C_{4-20}$ cycloalkyl, or a $C_{4-20}$ aryl; and $X^-$ is an organic or inorganic anion, for example, a hydroxide, halide, carboxylate, sulfonate, sulfate, formate, carbonate, or bicarbonate. Examples of organic quaternary ammonium compounds include tetramethyl ammonium hydroxide, tetrabutyl ammonium hydroxide, tetramethyl ammonium acetate, tetramethyl ammonium formate, tetrabutyl ammonium acetate, and combinations comprising at least one of the foregoing. Tetramethyl ammonium hydroxide is often used. The quaternary phosphonium compound can be a compound of the structure $(R^5)_4P^+X^-$, wherein each $R^5$ is the same or different, and is a $C_{1-20}$ alkyl, a $C_{4-20}$ cycloalkyl, or a $C_{4-20}$ aryl; and $X^-$ is an organic or inorganic anion, for example, a hydroxide, phenoxide, halide, carboxylate such as acetate or formate, sulfonate, sulfate, formate, carbonate, or bicarbonate. Where $X^-$ is a polyvalent anion such as carbonate or sulfate it is understood that the positive and negative charges in the quaternary ammonium and phosphonium structures are properly balanced. For example, where $R^{20}$ to $R^{23}$ are each methyls and $X^-$ is carbonate, it is understood that $X^-$ represents $2(CO_3^{-2})$. Examples of organic quaternary phosphonium compounds include tetramethyl phosphonium hydroxide, tetramethyl phosphonium acetate, tetramethyl phosphonium formate, tetrabutyl phosphonium hydroxide, tetrabutyl phosphonium acetate (TBPA), tetraphenyl phosphonium acetate (TPPA), tetraphenyl phosphonium phenoxide (TPPP), and combinations comprising at least one of the foregoing. The catalyst can comprise TBPA.

The beta catalyst can be a thermo-stabile beta catalyst. As used herein, the "thermo-stabile beta catalyst" refers to a beta catalyst that is stable for an increased amount of time as compared to a beta catalyst consisting only of TMAOH at the same reaction conditions. For example, the thermo-stabile beta catalyst can be active in the melt polymerization of polycarbonate at a temperature of 150 to 260°C and a pressure of greater than or equal to 100 mbara for an increased time as compared to a beta catalyst consisting of TMAOH at the same reaction conditions. The thermo-stabile beta catalyst can comprise tetraphenyl phosphonium acetate. The thermo-stabile beta catalyst can be added to the polymerization unit in a solution of water, for example, in a solution of 10 to 80 wt%, specifically, 30 to 50 wt%, for example, 40 wt% of thermo-stabile beta catalyst in water.

The amount of branching in the polycarbonate can affect the impact properties. As a result, too high branching, particularly in lower molecular weight polycarbonates, is undesirable when the polycarbonate will be used in impact required applications. Desirably, when the polycarbonate will be used in impact required applications (such as ophthalmic, electrical meters, cell phone, tablet cases, and the like), the amount of branching in the polycarbonate will be less than or equal to 1,200 ppm, preferably, less than or equal to 900 ppm, and more preferably, less than or equal to 500 ppm. However, since the initial polycarbonate (e.g., the higher molecular weight polycarbonate) is produced under conditions of higher temperatures and increased residence time, it generally has a higher branching than melt polycarbonate produced at lower temperatures and shorter residence times. A higher molecular weight melt polycarbonate often has

a branching level of up to 1,600 ppm, e.g., 800 to 1,200 ppm. For example, a melt polycarbonate having a weight average molecular weight (measured by gel permeation chromatography (GPC) calibrated on polystyrene standards) (Mw) of 56,000 to 60,000 Daltons, produced using tetrabutyl phosphonium acetate (TBPA) and $KNaHPO_4$ as the beta and alpha catalysts, will often yield a branching level of 800 to 1,200 ppm. However, if the polycarbonate is to be used as optical quality (OQ) polycarbonate, such a high Fries level can render the polycarbonate to not qualify for use as OQ polycarbonate, therefore, the reduction of the Mw of this polycarbonate to, for example, 13,000 to 18,000 Daltons, will not render it suitable for optical quality use.

Not to be bound by theory, however, beta catalyst often used for melt polymerization such as tetramethyl ammonium hydroxide (TMAOH), as well as many other beta catalysts, are thermo-sensitive. As a result, when making high Mw melt polycarbonates (e.g., having a Mw of greater than 55,000 Da), such catalysts are generally active for only an amount of time in a first oligomerization unit due to their rapid degradation at elevated temperatures, e.g., at temperatures of greater than or equal to 175°C. Therefore, a greater amount of alpha catalyst is needed when producing high Mw melt polycarbonates. It is theorized that it is the higher amount of alpha catalyst in the production of high Mw melt polycarbonates that results in the higher branching levels in the high Mw melt polycarbonates than in the low Mw melt polycarbonates (e.g., with a Mw of less than or equal to 42,000 Da).

It has been discovered that when the beta catalyst comprises a more thermo-stabile beta catalyst, the extent of reaction in the initial stages of the polymerization reaction could be increased allowing for the amount of alpha catalyst added to be reduced. Without being bound by theory, it is believed that the reduced amount of alpha catalyst present in the process results in a polycarbonate with a reduced Fries rearrangement such that the product polycarbonate can have a branching level of less than 600 ppm, specifically, less than or equal to 500 ppm, more specifically, less than or equal to 450 ppm. Accordingly, in the present process a high molecular weight polycarbonate can initially be prepared with a reduced branching level that can be introduced to a chain scission agent to result in a lower molecular weight polycarbonate with good impact properties.

The amount of alpha and beta catalyst used can be based upon the total number of moles of dihydroxy compound used in the polymerization reaction. When referring to the ratio of beta catalyst, for example, a phosphonium salt, to all dihydroxy compounds used in the polymerization reaction, it is convenient to refer to moles of catalyst per mole of the dihydroxy compound, meaning the number of moles of catalyst divided by the sum of the moles of each individual dihydroxy compound present in the reaction mixture. The transesterification catalyst can be used in an amount sufficient to provide $1 \times 10^{-8}$ to $1 \times 10^{-5}$, specifically, $1 \times 10^{-7}$ to $8 \times 10^{-6}$, more specifically, $3 \times 10^{-7}$ to $2 \times 10^{-6}$ moles of catalyst per mole of aromatic dihydroxy compound used. The alpha catalyst can be used in an amount sufficient to provide $1 \times 10^{-2}$ to $1 \times 10^{-8}$ moles, specifically, $1 \times 10^{-4}$ to $1 \times 10^{-7}$ moles of metal per mole of the dihydroxy compound used. The amount of beta catalyst (e.g., organic ammonium or phosphonium salts) can be $1 \times 10^{-2}$ to $1 \times 10^{-5}$, specifically $1 \times 10^{-3}$ to $1 \times 10^{-4}$ moles per total mole of the dihydroxy compound in the reaction mixture. The amount of alpha catalyst can be less than the amount of beta catalyst added to the polymerization. Quenching of the transesterification catalysts and any reactive catalyst residues with an acidic compound after polymerization is completed can also be useful in some melt polymerization processes. Removal of catalyst residues and/or quenching agent and other volatile residues from the melt polymerization reaction after polymerization can also be useful in some melt polymerization processes.

The alpha catalyst can be added to a polymerization at any stage in the polymerization, for example, upstream of, and/or directly to, and/or after a monomer mixing unit; and/or upstream of, and/or directly to, and/or after a polymerization unit (for example, to a first stage polymerization unit and/or the second reaction stage polymerization unit). Likewise, the catalyst addition process can be free of an alpha catalyst addition step. The beta catalyst can be added to a monomer mixing unit located upstream of a polymerization unit. For example, the process of adding a beta catalyst can comprise adding a beta catalyst and one or both of a dihydroxy monomer and a carbonate source to the monomer mixing unit in any order to form a beta catalyst mixture. The monomer mixing unit can be at atmospheric pressure. The monomer mixing unit can be maintained at a temperature of 100 to 250°C, specifically, 150 to 200°C, more specifically, 165 to 185°C.

A quencher composition can be added at one or more locations in the present melt polycarbonate to reduce the activity of the catalyst. The quencher composition comprises a quenching agent (also referred to herein as a quencher). For example, the quenching agent can comprise a sulfonic acid ester such as an alkyl sulfonic ester of the formula $R_1SO_3R_2$ wherein $R_1$ is hydrogen, $C_1$-$C_{12}$ alkyl, $C_6$-$C_{18}$ aryl, or $C_7$-$C_{19}$ alkylaryl, and $R_2$ is $C_1$-$C_{12}$ alkyl, $C_6$-$C_{18}$ aryl, or $C_7$-$C_{19}$ alkylaryl. Examples of alkyl sulfonic esters include benzenesulfonate, p-toluenesulfonate, methylbenzene sulfonate, ethylbenzene sulfonate, n-butyl benzenesulfonate, octyl benzenesulfonate and phenyl benzenesulfonate, methyl p-toluenesulfonate, ethyl p-toluenesulfonate, n-butyl p-toluene sulfonate, octyl p-toluenesulfonate and phenyl p- toluenesulfonate. The sulfonic acid ester can comprise alkyl tosylates such as n-butyl tosylate. The sulfonic acid ester can be present in the quencher composition in an amount of 0.1 to 10 volume percent (vol%), specifically, 0.1 to 5 vol%, more specifically, 0.5 to 2 vol% based on the total volume of the quencher composition.

The quenching agent can comprise boric acid esters (e.g., $B(OCH_3)_3$, $B(OCH_2CH_3)_3$, and $B(OC_6H_6)_3$), zinc borate, boron phosphate, aluminum stearate, aluminum silicate, zirconium carbonate, zirconium $C_1$-$C_{12}$ alkoxides, zir-

conium hydroxycarboxylates, gallium phosphide, gallium antimonide, germanium oxide, $C_1$-$C_{32}$ organogermanium compounds, $C_4$-$C_{32}$ tetraorganotin tin compound, $C_6$-$C_{32}$ hexaorganotin compound (e.g., $[(C_6H_6O)Sn(CH_2CH_2CH_2CH_3)_2]_2O$), $Sb_2O_3$, antimony oxide, $C_1$-$C_{32}$ alkylantimony, bismuth oxide, $C_1$-$C_{12}$ alkylbismuth, zinc acetate, zinc stearate, $C_1$-$C_{32}$ alkoxytitanium, and titanium oxide, phosphoric acid, phosphorous acid, hypophosphorous acid, pyrophosphoric acid, polyphosphoric acid, boric acid, hydrochloric acid, hydrobromic acid, sulfuric acid, sulfurous acid, adipic acid, azelaic acid, dodecanoic acid, L-ascorbic acid, aspartic acid, benzoic acid, formic acid, acetic acid, citric acid, glutamic acid, salicylic acid, nicotinic acid, fumaric acid, maleic acid, oxalic acid, benzenesulfinic acid, $C_1$-$C_{12}$ dialkyl sulfates (e.g., dimethyl sulfate and dibutyl sulfate), sulfonic acid phosphonium salts of the formula $(R^aSO_3^-)(PR^b_4)^+$ wherein $R^a$ is hydrogen, $C_1$-$C_{12}$ alkyl, $C_6$-$C_{18}$ aryl, or $C_7$-$C_{19}$ alkylaryl, and each $R^b$ is independently hydrogen, $C_1$-$C_{12}$ alkyl or $C_6$-$C_{18}$ aryl, sulfonic acid derivatives of the formula $A^1$-$(Y^1$-$SO_3X^1)_m$ wherein $A^1$ is a $C_1$-$C_{40}$ hydrocarbon group having a valence of m, $Y^1$ is a single bond or an oxygen atom, $X^1$ is a secondary or tertiary alkyl group of the formula - $CR^{15}R^{16}R^{17}$, a metal cation of one equivalent, an ammonium cation (e.g, $NR^b_3{}^+$ wherein each $R^b$ is independently hydrogen, $C_1$-$C_{12}$ alkyl or $C_6$-$C_{18}$ aryl), or a phosphonium (e.g, $PR^b_4{}^+$ wherein each $R^b$ is independently hydrogen, $C_1$-$C_{12}$ alkyl or $C_6$-$C_{18}$ aryl) wherein $R^{15}$ is a hydrogen atom or an alkyl group having 1 to 5 carbon atoms, $R^{16}$ is a hydrogen atom, a phenyl group or an alky group having 1 to 5 carbon atoms, and $R^{17}$ is the same as or different from $R^{15}$ and has the same definition as $R^{15}$, provided that two of $R^{15}$, $R^{16}$, and $R^{17}$ cannot be hydrogen atoms, and m is an integer of 1 to 4, provided that when $Y^1$ is a single bond, all of $X^1$ in an amount of m cannot be metal cations of one equivalent, a compound of the formula $^+X^2$-$A^2$-$Y^1$-$SO_3^-$ wherein $A^2$ is a divalent hydrocarbon group, $^+X^2$ is a secondary, tertiary or quaternary ammonium cation or a secondary (e.g., tertiary or quaternary phosphonium cation, and $Y^1$ is a single bond or an oxygen atom, a compound of the formula $A^3$-$(^+X^3)_n\cdot(R$-$Y^1$-$SO_3^-)_n$ wherein $A^3$ is a $C_1$-$C_{40}$ hydrocarbon group having a valence of n, $^+X^3$ is a secondary, tertiary or quaternary ammonium cation (e.g., $NR^b_3{}^+$ wherein each $R^b$ is independently hydrogen, $C_1$-$C_{12}$ alkyl or $C_6$-$C_{18}$ aryl), or a secondary, tertiary or quaternary phosphonium cation (e.g., $PR^b_4{}^+$ wherein each $R^b$ is independently hydrogen, $C_1$-$C_{12}$ alkyl or $C_6$-$C_{18}$ aryl), R is a monovalent $C_1$-$C_{40}$ hydrocarbon group, n is an integer of 2 to 4, and $Y^1$ is a single bond or an oxygen atom, a compound of the formula $A^5$-$Ad^1$-$A^4$-$(Ad^2$-$A^5)_\ell$ wherein $A^5$ is a monovalent or divalent $C_1$-$C_{40}$ hydrocarbon group, $A^4$ is a divalent $C_1$-$C_{40}$ hydrocarbon group, each of $Ad^1$ and $Ad^2$ is independently an acid anhydride group selected from $-SO_2$-O-$SO_2$-, $-SO_2$-O-CO-, and -CO-O-$SO_2$-, and $\ell$ is 0 or 1, provided that when $\ell$ is O, $-(Ad^2$-$A^5)_\ell$ is a hydrogen atom or a bond between $A^4$ and $A^5$, in which $A^5$ is a divalent hydrocarbon group or a single bond, aminosulfonic esters having the formula $R_aR_bN$-A-$SO_3R_c$, wherein $R_a$ and $R_b$ are each independently hydrogen, $C_1$-$C_{12}$ alkyl, $C_6$-$C_{22}$ aryl, $C_7$-$C_{19}$ alkylaryl, or $R_a$ and $R_b$, either singly or in combination, form an aromatic or non-aromatic heterocyclic compound with N (e.g., pyrrolyl, pyridinyl, pyrimidyl, pyrazinyl, carbazolyl, quinolinyl, imidazoyl, piperazinyl, oxazolyl, thiazolyl, pyrazolyl, pyrrolinyl, indolyl, purinyl, or pyrrolydinyl), $R_c$ is hydrogen, and A is $C_1$-$C_{12}$ alkyl, $C_6$-$C_{18}$ aryl, or $C_{17}$-$C_{19}$ alkylaryl (e.g., compounds such as N-(2-hydroxyethyl) piperazine-N'-3-propanesulfonic acid, 1,4,-piperazinebis (ethanesulfonic acid), and 5-dimethylamino-1-napthalenesulfonic acid), ammonium sulfonic esters of the formula $R_aR_bR_cN^+$-A-$SO_3^-$, wherein $R_a$, $R_b$, are each independently hydrogen, $C_1$-$C_{12}$ alkyl, $C_1$-$C_{12}$ aryl, $C_7$-$C_{19}$ alkylaryl, or $R_a$ and $R_b$, either singly or in combination, form an aromatic or non-aromatic heterocyclic compound with N (e.g., pyrrolyl, pyridinyl, pyrimidyl, pyrazinyl, carbazolyl, quinolinyl, imidazoyl, piperazinyl, oxazolyl, thiazolyl, pyrazolyl, pyrrolinyl, indolyl, purinyl, pyrrolydinyl, or the like), $R_c$ is a hydrogen, and A is $C_1$-$C_{12}$ alkyl, $C_6$-$C_{18}$ aryl, or $C_7$-$C_{19}$ alkylaryl, sulfonated polystyrene, methyl acrylate-sulfonated styrene copolymer, and combinations comprising at least one of the foregoing.

The quencher can be added in an amount of greater than or equal to 5 ppm, specifically, greater than or equal to 10 ppm based on the total amount of the polymerized polycarbonate. The quencher can be added in an amount of less than or equal to 5 ppm, specifically, less than or equal to 10 ppm based on the total amount of the polymerized polycarbonate. The quencher composition can be added to the polymerization unit such that the quencher is added in an amount of 0.5 to 15 ppm, specifically, 1 to 10 ppm, more specifically, 1.5 to 5 ppm, even more specifically, 1.5 to 3 ppm based on the total weight of the polymerized polycarbonate. Likewise, the quencher composition can be added to the polymerization unit such that the quencher is added in an amount of 5 to 10 ppm, specifically, 6 to 8 ppm based on the total weight of the polymerized polycarbonate. Likewise, the quencher can be added such that the quencher or derivatives thereof are present in an amount of 0.1 to 50 times, specifically, 0.5 to 30 times, per the neutralization equivalent of the catalyst used. The quencher composition can be added as a liquid or a solid composition at one or more locations in the melt preparation of the polycarbonate.

When the quencher composition is added to a polymerization unit and/or to an extruder, the quencher composition can optionally be mixed, for example, by means of a Henschel mixer, and introduced to a feeder, such as a gravimetric feeder, and then fed to a polymerization unit and/or to an extruder through a feeder, such as a side feeder and/or directly into a throat of the extruder.

When the quencher composition is added to a connecting stream that connects a first unit to a second unit, then the connecting stream comprising the added quencher composition can be mixed via, for example, the establishment of a turbulent flow, an in-line mixer, for example, a static mixer located in a pipe that contains the connecting stream and/or in a mixer unit that houses a rotating paddle, for example, a continuously stirred tank. Mixing can occur for 0.3

to 5 minutes (min), for example, 0.5 to 3 min, for example, 1 to 2 min. The quencher composition can be added to the connecting stream without mixing.

The quencher composition can be added after the formation of the polycarbonate composition, i.e., after extruding and/or melt filtering. For example, after the polycarbonate composition is prepared, the polycarbonate composition can be mixed with a quencher composition, for example, in an in-line mixer, a twin barrel mixer, or the like, and then pelletized. Optionally, polycarbonate composition is prepared, quenched (via the addition of the quencher), the quenched polycarbonate is melt filtered and then devolatilized to remove residual monomers before the addition of additives. Likewise, the polycarbonate composition can first be pelletized and then the quencher composition can be introduced. The quencher composition can be added, for example, by flowing or spraying, in the solid or liquid form onto polycarbonate pellets and can optionally be mixed with the pellets in, for example, a melt kneader. In this scenario, an additive can be introduced after the introduction of the quencher composition. For example, a pelletized polycarbonate, for example, one that is free of an additive, can be combined with a quencher composition and an antioxidant and/or a release agent can then be added.

The polycarbonate composition can be devolatized to remove, for example, low Mw polycarbonates (such as those with a molecular weight of less than or equal to 1,000 Daltons). The devolatization can reduce the residual monomer level to an amount of less than 200 ppm based on the total weight of the polymerized polycarbonate and/or can reduce a byproduct level to less than 200 ppm based on the total weight of the polymerized polycarbonate. Devolatization can occur in a polymerization unit (for example, in a second stage polymerization unit), in a reactor, in an extruder, in a mixer, or in a combination comprising one or more of the foregoing. The polycarbonate can be quenched prior to devolatization. For example, a quencher can be added upstream of and/or directly to an extruder, the extruder can be devolatized, and an additive can be added.

It is noted that an amount of water can be added to the extruder to devolatilize the polycarbonate composition. The amount of water that can be introduced can be 0.1 to 10 wt%, specifically, 0.3 to 5 wt% based on the total weight of the polycarbonate composition.

The Applicants found that by adding an amount of a chain scission agent to a stream in a melt polymerization unit they could modify the resultant molecular weight of at least a portion of the polymerized polycarbonate in a continuous melt polycarbonate process without changing the processing conditions. In other words, the present continuous process has the benefit of being able to easily modify the molecular weight of all or a portion of the polymerized polycarbonate produced without changing the processing parameters, and hence without a several hour changeover process and without large amounts of waste or off-spec polymer.

The chain scission agent, according to the invention, is be added after a final polymerization (e.g., after a final polymerization unit). As used herein, "after final polymerization" refers to a time after which the Mw does not increase by greater than 10 wt%. Preferably, the Mw does not increase by greater than or equal to 5 wt% after final polymerization.

If there is a devolatilization after final polymerization, then the chain scission agent can be added upstream of and/or directly to and/or downstream of the devolatization.

The chain scission agent can be added upstream of a quencher. It is noted that as used herein, when a first component is added "upstream" of a second component, it is understood that the first component can be added in a location upstream of the addition location of the second component or, where applicable, the first component can be added in the same location, but at a time prior to the addition of the second component. For example, a chain scission agent can be added to a devolatization unit, the polycarbonate can be mixed for an amount of time, and subsequently, a quencher can be added. Likewise, a chain scission agent can be added to a conduit entering an extruder and a quenching agent can be added directly into the extruder. If a quencher is added upstream of the chain scission agent, then, in addition to the chain scission agent, a catalyst is added, wherein a second quencher can be added downstream of the chain scission agent and catalyst.

The chain scission agent can be any agent that breaks the polycarbonate chain, for example, a carbonate source, water, an aryl alcohol, or a combination comprising one or more of the foregoing. The chain scission agent can comprise a diaryl carbonate (such as diphenyl carbonate, di-p-tert-butyl phenol carbonate, di-paracumyl phenol carbonate, di-dicumyl phenol carbonate, bismethyl salicyl carbonate, di-p-hydroxy benzonitrile carbonate), p-hydroxy benzonitrile, paracumyl phenol, p-tert-butyl phenol, dicumyl phenol, methyl phenyl carbonate, dimethyl carbonate, diethyl carbonate, ethyl phenyl carbonate, phenol, a diol (for example, BPA), water, or a combination comprising one or more of the foregoing. The chain scission agent can comprise a diaryl carbonate with an electron withdrawing group such as bis(4-nitrophenyl)carbonate, bis(2-chlorophenyl)carbonate, bis(4-chlorophenyl) carbonate, bis(methyl salicyl)carbonate, bis(4-methylcarboxylphenyl) carbonate, bis(2-acetylphenyl) carboxylate, bis(4-acetylphenyl) carboxylate, or a combination comprising one or more of the foregoing. The chain scission agent can comprise a combination comprising at least one of the foregoing chain scission agents. Specifically, the chain scission agent can comprise a chain scission agent that will not cause a reduction in the endcap level of the resulting polycarbonate, for example, a diaryl carbonate. The chain scission agent can comprise or can consist of diphenyl carbonate (DPC)). The chain scission agent can comprise a monomer used in the polymerization process, water, or an amount of a polymerization by-product. For example, if the

polymerization occurring in the polymerization unit is the polymerization of a bisphenol A homopolycarbonate, then the polymerization can occur by the following scheme:

***DPC* + *BPA* ⇆ *PC* + *PhOH***

In this scheme, diphenyl carbonate (DPC) reacts with bisphenol A (BPA) to form the polycarbonate (PC) and phenol (PhOH) as a by-product. Adding one or more of phenol, DPC, or water will act to break the polymer chain to result in a decrease in the molecular weight of the polycarbonate.

The chain scission agent can be added as a molten agent (e.g., consisting of the pure molten agent) or can be dissolved in a solvent (for example, anisole, toluene, acetone, or a combination comprising one or more of the foregoing) that is inert to the polymerization.

The amount of chain scission agent to be added is based upon the molecular weight of the polymerized polycarbonate (e.g., the initial molecular weight), and the desired molecular weight (e.g., final molecular weight). The amount of chain scission agent can be an amount that will reduce the molecular weight of the polymerized polycarbonate to a modified or final molecular weight. The specific amounts can readily be determined.

A feedback loop can be employed to monitor the melt polymerization process, where, for example, the viscosity of the polymerized polycarbonate and/or the modified polycarbonate can be monitored and the flow rate of the chain scission agent can be adjusted based on the measured viscosity. The viscosity can be measured, for example, using an in-line viscometer or can be determined based on flow and pressure measurements.

In the present continuous melt polymerization, the initial addition of the carbonate (e.g., DPC) can optionally be the only carbonate addition until after a final polymerization, where a carbonate chain scission agent (e.g., DPC) is added to reduce the molecular weight to a desired level. In other words, optionally, no carbonate is introduced after the initial carbonate introduction to the melt polymerization process to react with the dihydroxy compound, until after the final polymerization.

The polymerized polycarbonate can be split into multiple streams and each stream independently can be adjusted or not adjusted, depending upon a desired molecular weight of the melt polycarbonate of the respective stream.

FIG. 1 illustrates a melt polycarbonate polymerization system. Initially, dihydroxy reactant A and carbonate compound B are added at a fixed molar ratio along with beta catalyst C to a pre-mix vessel 10 to form a pre-mixture. The pre-mix vessel 10 can be maintained at 160 to 180°C and atmospheric pressure. The pre-mixture, optional additional carbonate compound B, and alpha catalyst D, where the additional carbonate compound B can be the same or different as that added to the pre-mixer, is sent to a first oligomerization vessel 20. The first oligomerization vessel 20 can operate at, for example, a temperature of 230 to 260°C and a vacuum of 140 to 200 millibar atmosphere (mbara). A phenol byproduct from the polymerization reaction in first oligomerization vessel 20 is removed. The mixture then flows into a second oligomerization vessel 21 that can, for example, operate at a higher temperature of 270 to 290°C and a deeper vacuum of 30 to 50 mbara, e.g., for further phenol removal. The prepolymer, as formed in the oligomerization vessel 21, then flows to a first polymerization vessel 30 that can operate, for example, at a temperature of 290 to 315°C and 1 to 2.5 mbara. The effluent from the first polymerization vessel 30 can optionally be split into multiple (e.g., two) second polymerization vessels 31, 32 that can operate, for example, at 290 to 315°C and 0.5 to 1.5 mbara to result in the formation of a molten polycarbonate. It is noted that phenol by-product E and any solvent can be removed, for example, by a scrubber 50, from the oligomerization vessel 20, 21 and/or from the polymerization vessels 30, 31, 32. Chain scission agent F, G can be added to the second polymerization vessels 31, 32, respectively, or downstream thereof, where the chain scission agent F and the chain scission agent G can be the same or different to ultimately result in polycarbonate J, K, respectively, that may or may not have the same molecular weight. It is noted that the process parameters are exemplary and are dependent upon the molecular weight desired.

The polycarbonate then flows to an extruder 40, 41 where quencher H, to deactivate polymerization catalyst, and optional additives I are added to the polycarbonate.

The extruder 40, 41 can be a twin-screw extruder and at least one of the components can be incorporated into the composition by feeding directly into the extruder 40, 41 at the throat and/or downstream of the throat through, for example, a sidestuffer. Additives I can also be compounded into a masterbatch with a desired polymeric resin and fed into the extruder 40, 41. The extruder 40, 41 can be operated at a temperature higher than allows the composition to flow. After the extruder 40, 41, the resulting polycarbonate is pumped through a melt filter 60, 61 that can be a stainless steel filter and that has a 2.5 to 50 micrometer, specifically a 10 to 40 micrometer, more specifically a 15 to 30 micrometer mesh size, e.g., to remove gels and other impurities from the polycarbonate J, K. The product can then be stranded in a die-head and finally pelletized and packaged. The pellets, so prepared, when cutting the extrudate can be, for example, one-fourth inch long or less as desired. Such pellets can be used for subsequent molding, shaping, or forming. Typical nominal throughput per line ranges from 3 to 6.6 tons/hour.

It is understood that while the present figure illustrates the stream exiting the polymerization vessel 30 as being split into two streams entering polymerization vessels 31, 32, the present continuous process can likewise remain as a

single stream or be split into more than two streams. When the melt polymerization comprises two or more streams, it is understood that the molecular weight of the produce polycarbonate in each stream independently has a different molecular weight, where at least one of the streams can be prepared without the introduction of a chain scission agent. It is further noted that while the chain scission agent F, G is illustrated as being added in between the polymerization vessels 31, 32 and the extruder 40, 41, the chain scission agent F, G can likewise be added directly to the extruder 40, 41 (for example, to the throat of the extruder 40, 41 and/or through a side stuffer).

The continuous polymerization process can comprise splitting of a polymerized polycarbonate stream into two or more streams that may or may not experience the same polymerization conditions thereafter (i.e., they can attain different molecular weights, have different additives added thereto, etc.). For example, polycarbonate can be prepared in a first portion of the continuous polymerization process; a stream comprising polymerized polycarbonate can be split into two or more streams and directed to 2 or more operating lines. For example, a process can comprise polymerizing polycarbonate in a series of oligomerization units (referred to as the oligomerization stage); a stream exiting the oligomerization stage can be split into two streams (streams A and B), where stream A is directed to polymerization unit A and stream B is directed to polymerization unit B. Likewise, a continuous process can comprise polymerizing polycarbonate in a series of oligomerization units followed by polymerizing in a series of polymerization units; a stream exiting the polymerization stage can be split into two streams: A and B, where stream A is directed to extruder A and stream B is directed to extruder B. Likewise, a process can comprise polymerizing polycarbonate in a series of oligomerization units followed by polymerizing in a series of two polymerization units; a stream exiting the first polymerization unit can be split into two streams: A and B, where stream A is directed to second polymerization unit A and stream B is directed to second polymerization unit B. In any of the aforementioned scenarios, a quencher composition can be added to one or both of streams A and B, where the quencher composition can be the same or different. One skilled in the art can readily envision other embodiments comprising more than 2 streams and embodiments where the streams are split at different locations. A chain scission agent can be added to one or more of the streams.

An additive can further be added at one or more locations in the present continuous melt preparation of the polycarbonate. For example, the additive can be added upstream of a polymerization unit, directly into a polymerization unit (for example, at an inlet, in a side feeder, in an outlet, or a combination comprising one or more of the foregoing), downstream of a polymerization unit, in a reactor that is not polymerizing polycarbonate, upstream of an extruder, directly into an extruder (for example, at the throat of the extruder, in a side feeder, in an outlet, or a combination comprising one or more of the foregoing), downstream of an extruder, or a combination comprising one or more of the foregoing. The additive can be added as part of the quencher composition and/or can be added separately. For example, quencher composition comprising a heat stabilizer can be added to the polycarbonate and an additive composition comprising a release agent and a UV agent can be added to the quenched composition. The additive can be added in a molten state or can be added after an extruded polycarbonate is re-melted. The additive can be filtered prior to being added into the polymerization unit.

The additive can comprise, for example, an impact modifier, a flow modifier, a filler (e.g., a particulate polytetrafluoroethylene (PTFE), glass, carbon, a mineral, or metal), a reinforcing agent (e.g., glass fibers), an antioxidant, a heat stabilizer, a light stabilizer, an ultraviolet (UV) agent (such as a UV light stabilizer and a UV absorbing additive), a plasticizer, a lubricant, a release agent (such as a mold release agent (such as glycerol monostearate, pentaerythritol stearate, glycerol tristearate, stearyl stearate, and the like)), an antistatic agent, an antifog agent, an antimicrobial agent, a colorant (e.g, a dye or pigment), a surface effect additive, a radiation stabilizer, a flame retardant, an anti-drip agent (e.g., a PTFE-encapsulated styrene-acrylonitrile copolymer (TSAN)), or a combination comprising one or more of the foregoing. For example, a combination of a heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 to 10.0 weight percent (wt%), or 0.01 to 5 wt%, each based on the total weight of the polymer in the polymerized composition.

Heat stabilizer additives include organophosphites (e.g. triphenyl phosphite, tris-(2,6-dimethylphenyl)phosphite, tris-(mixed mono-and dinonylphenyl)phosphite or the like), phosphonates (e.g., dimethylbenzene phosphonate or the like), phosphates (e.g., trimethyl phosphate, or the like), or combinations comprising at least one of the foregoing heat stabilizers. The heat stabilizer can comprise tris(2,4-di-t-butylphenyl) phosphate available as IRGAPHOS™ 168. The heat stabilizer can comprise IRGAPHOS™ 205. Heat stabilizers are generally used in amounts of 0.01 to 5 wt%, based on the total weight of polymer in the composition.

The term "antistatic agent" refers to monomeric, oligomeric, or polymeric materials that can be processed into polymers and/or sprayed onto materials or articles to improve conductive properties and overall physical performance. Examples of monomeric antistatic agents include ethoxylated amines, primary, secondary and tertiary amines, ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate or the like, quaternary ammonium salts, quaternary ammonium polymers, imidazoline derivatives, sorbitan esters, ethanolamides, betaines, or the like, or combinations comprising at least one of the foregoing monomeric antistatic agents.

Polymeric antistatic agents include certain polyesteramides, polyether-polyamide (polyetheramide) block copolymers, polyetheresteramide block copolymers, polyetheresters, or polyurethanes, each containing polyalkylene glycol moieties polyalkylene oxide units such as polyethylene glycol, polypropylene glycol, polytetramethylene glycol, and the like. Such polymeric antistatic agents are commercially available, for example PELESTAT™ 6321 (Sanyo) or PEBAX™ MH1657 (Atofina), IRGASTAT™ P18 and P22 (Ciba-Geigy). Other polymeric materials that can be used as antistatic agents are inherently conducting polymers such as polyaniline (commercially available as PANIPOL™EB from Panipol), polypyrrole and polythiophene (commercially available from Bayer), which retain some of their intrinsic conductivity after melt processing at elevated temperatures. In an embodiment, carbon fibers, carbon nanofibers, carbon nanotubes, carbon black, or a combination comprising at least one of the foregoing can be used in a polymer composition containing chemical antistatic agents to render the composition electrostatically dissipative.

Radiation stabilizers can also be present, specifically gamma-radiation stabilizers, gamma-radiation stabilizers include alkylene polyols such as ethylene glycol, propylene glycol, 1,3-propanediol, 1,2-butanediol, 1,4-butanediol, meso-2,3-butanediol, 1,2-pentanediol, 2,3-pentanediol, 1,4-pentanediol, 1,4-hexandiol, and the like; cycloalkylene polyols such as 1,2-cyclopentanediol, 1,2-cyclohexanediol, and the like; branched alkylenepolyols such as 2,3-dimethyl-2,3-butanediol (pinacol), and the like, as well as alkoxy-substituted cyclic or acyclic alkanes. Unsaturated alkenols are also useful, examples of which include 4-methyl-4-penten-2-ol, 3-methyl-pentene-3-ol, 2-methyl-4-penten-2-ol, 2,4-dimethyl-4-pene-2-ol, and 9-decen-1-ol, as well as tertiary alcohols that have at least one hydroxy substituted tertiary carbon, for example 2-methyl-2,4-pentanediol (hexylene glycol), 2-phenyl-2-butanol, 3-hydroxy-3-methyl-2-butanone, 2-phenyl-2-butanol, and the like, and cyclic tertiary alcohols such as 1-hydroxy-1-methyl-cyclohexane. Certain hydroxymethyl aromatic compounds that have hydroxy substitution on a saturated carbon attached to an unsaturated carbon in an aromatic ring can also be used. The hydroxy-substituted saturated carbon can be a methylol group ($-CH_2OH$) or it can be a member of a more complex hydrocarbon group such as $-CR^4HOH$ or $-CR_2^4OH$ wherein $R^4$ is a complex or a simple hydrocarbon. Specific hydroxy methyl aromatic compounds include benzhydrol, 1,3-benzenedimethanol, benzyl alcohol, 4-benzyloxy benzyl alcohol and benzyl benzyl alcohol. 2-Methyl-2,4-pentanediol, polyethylene glycol, and polypropylene glycol are often used for gamma-radiation stabilization.

Colorants such as pigment and/or dye additives can also be present. Useful pigments can include, for example, inorganic pigments such as metal oxides and mixed metal oxides such as zinc oxide, titanium dioxides, iron oxides, or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violet 29, Pigment Blue 15, Pigment Blue 60, Pigment Green 7, Pigment Yellow 119, Pigment Yellow 147, Pigment Yellow 150, and Pigment Brown 24; or combinations comprising at least one of the foregoing pigments.

Dyes are generally organic materials and include coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly ($C_{2-8}$) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti-stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinque phenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethylimino phenoxazonium perchlorate; 2-(1-naphthyl)-5-phenyloxazole; 2,2'-p-phenylen-bis(5-phenyl oxazole); rhodamine 700; rhodamine 800; pyrene, chrysene, rubrene, coronene, or the like; or combinations comprising at least one of the foregoing dyes.

Possible fillers or reinforcing agents include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, alumino silicate or armospheres, kaolin, whiskers of silicon carbide, alumina, boron carbide, iron, nickel, or copper, continuous and chopped carbon fibers or glass fibers, molybdenum

sulfide, zinc sulfide, barium titanate, barium ferrite, barium sulfate, heavy spar, $TiO_2$, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated with a layer of metallic material to facilitate conductivity, or surface treated with silanes to improve adhesion and dispersion with the polymer matrix. Fillers are used in amounts of 1 to 200 parts by weight, based on 100 parts by weight of based on 100 parts by weight of the total composition.

Antioxidant additives include organophosphites such as tris(nonyl phenyl)phosphite, tris(2,4-di-t-butylphenyl)phosphite, bis(2,4-di-t-butylphenyl) pentaerythritol diphosphite, distearyl pentaerythritol diphosphite; alkylated monophenols or polyphenols; alkylated reaction products of polyphenols with dienes, such as tetrakis [methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilauryl thiopropionate, ditridecylthiodipropionate, octadecyl-3-(3,5-di-tert-butyl-4-hydroxyphenyl) propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants can be used in amounts of 0.01 to 0.1 parts by weight, based on 100 parts by weight of the total composition, excluding any filler.

UV absorbing additives include hydroxybenzophenones; hydroxy benzotriazoles; hydroxybenzotriazines; cyanoacrylates; oxanilides; benzoxazinones; aryl salicylates; monoesters of diphenols such as resorcinol monobenzoate; 2-(2H-benzotriazol-2-yl)-4-(1,1,3,3-tetramethylbutyl)-phenol (CYASORB™ 5411); 2-hydroxy-4-n-octyloxy benzophenone (CYASORB™ 531); 2-[4,6-bis(2,4-dimethylphenyl)-1,3,5-triazin-2-yl]- 5-(octyloxy)-phenol (CYASORB™ 1164); 2,2'-(1,4- phenylene)bis(4H-3,1-benzoxazin-4-one) (CYASORB™ UV- 3638); poly[(6-morphilino-s-triazine-2,4-diyl)[2,2,6,6-tetramethyl-4-piperidyl) imino]-hexamethylene[(2,2,6,6-tetramethyl-4-piperidyl)imino], 2-hydroxy-4-octyloxybenzophenone (UVINUL™3008), 6-tert-butyl-2-(5-chloro-2H-benzotriazole-2-yl)-4-methylphenyl (UVINUL™3026), 2,4-di-tert-butyl-6-(5-chloro-2H-benzotriazole-2-yl)-phenol (UVINUL™3027), 2-(2H-benzotriazole-2-yl)-4,6-di-tert-pentylphenol (UVINUL™ 3028), 2-(2H-benzotriazole-2-yl)-4-(1,1,3,3-tetramethylbutyl)-phenol (UVINUL™3029), 1,3-bis[(2'cyano-3',3'-diphenylacryloyl)oxy]-2,2-bis-{[(2'-cyano-3',3'-diphenyl acryloyl)oxy]methyl}-propane(UVINUL™3030), 2-(2H-benzotriazole-2-yl)-4-methylphenol (UVINUL™3033), 2-(2H-benzotriazole-2-yl)-4,6-bis(1-methyl-1-phenyethyl)phenol (UVINUL™3034), ethyl-2-cyano-3,3-diphenylacrylate (UVINUL™3035), (2-ethylhexyl)-2-cyano-3,3-diphenylacrylate (UVINUL™3039), N,N'-bisformyl-N,N'-bis(2,2,6,6-tetramethyl-4-piperidinyl)hexamethylendiamine (UVINUL™4050H), bis-(2,2,6,6-tetramethyl-4-piperidyl)-sebacate (UVINUL™4077H), bis-(1,2,2,6,6-pentamethyl-4-piperdiyl)-sebacate + methyl-(1,2,2,6,6-pentamethyl-4-piperidyl)-sebacate (UVINUL™ 4092H) 1,3-bis[(2-cyano-3,3-diphenylacryloyl)oxy] -2,2-bis[[(2-cyano-3, 3-diphenyl acryloyl)oxy]methyl]propane (UVINUL™ 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; TINUVIN™ 234; nano-size inorganic materials such as titanium oxide, cerium oxide, and zinc oxide, all with particle size less than or equal to 100 nanometers; or the like, or combinations comprising at least one of the foregoing UV absorbers. UV absorbers can be used in amounts of 0.01 to 1 part by weight, based on 100 parts by weight of polycarbonate and impact modifier. UV absorbers that can be particularly useful with the polycarbonate compositions disclosed herein include 2-(2H-benzotriazol-2-yl)-4-(1,1,3,3-tetramethylbutyl)-phenol (e.g., CYASORB™ 5411 commercially available from Cytec Industries, Inc., Woodland Park, New Jersey) and 2,2'-(1,4- phenylene)bis(4H-3,1-benzoxazin-4-one) (e.g., CYASORB™ UV- 3638, commercially available from Cytec Industries, Inc., Woodland Park, New Jersey), and combinations comprising at least one of the foregoing. The UV stabilizers can be present in an amount of 0.01 to 1 wt%, specifically, 0.1 to 0.5 wt%, and more specifically, 0.15 to 0.4 wt%, based upon the total weight of the polycarbonate composition.

Plasticizers, lubricants, and/or mold release agents can also be used. There is considerable overlap among these types of materials, which include, for example, phthalic acid esters such as dioctyl-4,5-epoxy-hexahydrophthalate; tris-(octoxycarbonylethyl) isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol A; poly-alpha-olefins; epoxidized soybean oil; silicones, including silicone oils; esters, for example, fatty acid esters such as alkyl stearyl esters, e.g., methyl stearate, stearyl stearate, pentaerythritol tetrastearate, and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a suitable

solvent; waxes such as beeswax, montan wax, paraffin wax, or the like.

The plasticizers, lubricants, and/or mold release agent can comprise compound of formula (I)

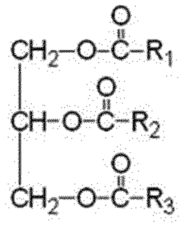

(I)

wherein $R_1$, $R_2$, and $R_3$ can be the same or different hydrocarbon chains with 8 to 20 carbon atoms and 0 to 6 unsaturations, wherein $R_1$, $R_2$, and $R_3$ are each independently selected from $C_8$-$C_{20}$ alkyl, $C_8$-$C_{20}$ haloalkyl, $C_8$-$C_{20}$ polyhaloalkyl, $C_8$-$C_{20}$ alkene, and $C_8$-$C_{20}$ alkoxy. $R_1$, $R_2$, and $R_3$ can each independently be from $C_{17}H_{35}$ or all $R_1$, $R_2$, and $R_3$ can be $C_{17}H_{35}$. The plasticizers, lubricants, and/or mold release agent can comprise glycerol monostearate, glycerol monopalmitate, glycerol tristearate, glycerol tristearate, stearyl stearate, or a combination comprising one or more of the foregoing. One or more of the aforementioned can have an acid value of 2 to 20 milligrams (mg) KOH as determined by: adding 100 milliliters (ml) of isopropanol to 2.5 grams (g) of a partial ester to thereby dissolve the partial ester; phenolphthalein is added to the resultant solution as an indicator; titrating the resultant mixture using a 0.1 moles per liter (mol/L) standard solution of potassium hydroxide to thereby obtain the acid value (mg KOH). In the measurement of the acid value, when it is expected that the partial ester has an acid value of 1 or less, the amount of the partial ester subjected to measurement is changed to 20 g; when it is expected that the partial ester has an acid value of from 1 to 4, the amount of the partial ester subjected to measurement is changed to 10 g; and when it is expected that the partial ester has an acid value of 15 or more, the amount of the partial ester subjected to measurement is changed to 0.5 g.

The plasticizers, lubricants, and/or mold release agent can be present in an amount of 0.01 to 5 parts by weight, specifically, 0.01 to 0.1 parts by weight, based on 100 parts by weight of polycarbonate and impact modifier.

Useful flame retardants include organic compounds that include phosphorus, bromine, and/or chlorine. Non-brominated and non-chlorinated phosphorus-containing flame retardants can be preferred in certain applications for regulatory reasons, for example organic phosphates and organic compounds containing phosphorus-nitrogen bonds.

Flame retardant aromatic phosphates include triphenyl phosphate, tricresyl phosphate, isopropylated triphenyl phosphate, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, and 2-ethylhexyl diphenyl phosphate. Di- or polyfunctional aromatic phosphorus-containing compounds are also useful, for example resorcinol tetraphenyl diphosphate (RDP), the bis(diphenyl) phosphate of hydroquinone and the bis(diphenyl) phosphate of bisphenol A, respectively, and their oligomeric and polymeric counterparts. Flame retardant compounds containing phosphorus-nitrogen bonds include phosphonitrilic chloride, phosphorus ester amides, phosphoric acid amides, phosphonic acid amides, phosphinic acid amides, and tris(aziridinyl) phosphine oxide. When used, phosphorus-containing flame retardants are present in amounts of 0.1 to 30 parts by weight, more specifically 1 to 20 parts by weight, based on 100 parts by weight of the total composition, excluding any filler.

Halogenated materials can also be used as flame retardants, for example bisphenols of which the following are representative: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; and 2,2-bis-(3,5-dichloro-4-hydroxyphenyl)-propane 2,2 bis-(3-bromo-4-hydroxyphenyl)-propane. Other halogenated materials include 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, as well as oligomeric and polymeric halogenated aromatic compounds, such as a copolycarbonate of bisphenol A and tetrabromobisphenol A and a carbonate precursor, e.g., phosgene. Metal synergists, e.g., antimony oxide, can also be used with the flame retardant. When present, halogen containing flame retardants are present in amounts of 1 to 25 parts by weight, more specifically 2 to 20 parts by weight, based on 100 parts by weight of the total composition, excluding any filler.

Inorganic flame retardants can also be used, for example salts of $C_{1-16}$ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as $Na_2CO_3$, $K_2CO_3$, $MgCO_3$, $CaCO_3$, and $BaCO_3$, or fluoro-anion complexes such as $Li_3AlF_6$, $BaSiF_6$, $KBF_4$, $K_3AlF_6$, $KAlF_4$, $K_2SiF_6$, and/or $Na_3AlF_6$. When present, inorganic flame

retardant salts are present in amounts of 0.01 to 10 parts by weight, more specifically 0.02 to 1 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. A TSAN comprises 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. Antidrip agents can be used in amounts of 0.1 to 10 parts by weight, based on 100 parts by weight of the total composition, excluding any filler.

The quenched composition can be essentially free of chlorine and bromine. "Essentially free of chlorine and bromine" is defined as having a bromine and/or chlorine content of less than or equal to 100 ppm, less than or equal to 75 ppm, or less than or equal to 50 ppm, based on the total parts by weight of the composition, excluding any filler.

The quenched composition can have a light transparency of greater than 90% as determined using 3.2 mm thick samples using ASTM D1003-00, Procedure B using CIE standard illuminant C, with unidirectional viewing. Accordingly, when the quenched composition has such a light transparency, it is herein referred to as an "optical grade" composition.

## EXAMPLES

In the examples, the molecular weight was measured by GPC using Polystyrene standards.

Endcap levels were obtained according to the formula:

$$\%EC = 100 - (\text{ppm OH} + \text{Snell Mn})/340{,}000$$

wherein the ppm OH of each sample was measured by FTIR (Perkin Elmer FTIR Spectrum One equipment), dissolving 0.5 grams of the sample in 25 milliliters of dried chloroform. The ppm of OH were calculated measuring the absorbance at 3,584 $cm^{-1}$, using a univariable calibration, normalizing the absorbance by diving it by the 2,779 $cm^{-1}$ absorbance.

### Examples 1-4: The effect of adding a diaryl carbonate to a melt polycarbonate

Experiments were run in a continuous melt polycarbonate plant, where 39.8 kg/h bisphenol-A (BPA) and 37.3 kg/h of diphenylcarbonate (DPC) were fed into a continuously stirred formulation tank. The formulation tank was operated at atmospheric pressure and 170°C. A 3.2 wt% aqueous solution of the onium type catalyst (tetrabutyl phosphonium acetate) was added to the vessel at a rate of 83 milliliters per hour (mL/h), providing an equilibrated mixture of unreacted monomers, phenol, and low molecular weight oligomers.

The outlet stream of the formulation tank was then pumped to a continuously stirred first oligomerization unit, which was operated at 257°C and 180 mbara vacuum. The vapor phase containing phenol and unreacted monomers BPA and DPC was continuously distilled in a scrubber where reflux ratio is adjusted so that the column head temperature was 127°C to yield high purity phenol and recovering the unreacted BPA and DPC which were directed back into the first oligomerization unit. In order to compensate for the DPC losses in the phenol overhead streams of the forthcoming reactors, an additional stream of DPC was added to the first oligomerization unit at 0.9 kg/h. An aqueous stream of 50 ppm $KNaHPO_4$ was added to the first oligomerization unit at a flowrate of 0.8 milliliters per minute (mL/min).

The outlet stream of the first oligomerization unit was then pumped to a stirred second oligomerization unit that was operated at 280°C and 37 mbar vacuum. The outlet stream of the second oligomerization unit was pumped to the polymerization section where two horizontal reactors (polymerizers) in series are used to reach the final viscosity target. The first polymerizer operated at 300 °C and 2.5 to 3.0 mbar vacuum and the second polymerizer operated at 1.0 to 1.5 mbar vacuum and 302°C. The polymer stream from the second polymerizer was sent to a downstream 6 barrel twin screw finishing extruder (length to diameter ratio of 21, and a diameter of 44 millimeters). The barrel temperature was set at 300°C and screw ran at 100 revolutions per minute.

In Examples 2-4, a diphenyl carbonate stream was added in the outlet of the second polymerizer. The diphenyl carbonate was mixed with the polycarbonate using an in-line static mixer located in the feeding pipe to the extruder. The molecular weight and the endcap levels were determined for Examples 1-4 and are shown in Table 1.

Table 1

| Example | 1 | 2 | 3 | 4 |
|---|---|---|---|---|
| DPC Amount (ppm) | 0 | 2,500 | 5,000 | 7,500 |

(continued)

| Table 1 | | | | |
|---|---|---|---|---|
| Example | 1 | 2 | 3 | 4 |
| Water (ppm) | 0 | 0 | 0 | 0 |
| Mw (Daltons) (PS Standard) | 59,955 | 52,282 | 47,000 | 43,378 |
| Endcap level (%) | 67 | 71 | 76 | 78 |
| Branching (ppm) | 1,062 | 1,152 | 1,083 | 949 |

Table 1 shows that adding an amount of DPC to the polycarbonate results in a decrease in molecular weight and an increase in the endcap level. In other words, a single melt polycarbonate production line can be used to produce multiple different Mw polycarbonates without changing the processing conditions in the system. Additionally, the multiple different Mw polycarbonates can, if desired, be produced without a reduction in the endcapping level of the polycarbonate. Therefore, the addition of chain scission agent (e.g., a diaryl carbonate, methyl phenyl carbonate, dimethyl carbonate, diethyl carbonate, ethyl phenyl carbonate, phenol, or a combination comprising one or more of the foregoing) to the polymerized polycarbonate can be employed to enable a plant to efficiently produce multiple Mw polycarbonates, and can produce them without a reduction (or with an increase) in endcapping level. The increase in endcapping level can be greater than or equal to 3%, specifically, greater than or equal to 5%, and even greater than or equal to 10%, as compared to the polycarbonate before the Mw reduction.

**Examples 5-13: The effect of adding a chain scission agent to a melt polycarbonate**

A melt polycarbonate with an MVR of 6.0 $cm^3$/10 min as determined at 300°C under a load of 1.2 kg according to ASTM D1238-04 was run through an extruder and a chain scission agent was added. Table 2 shows Examples 5-11, where either phenol (P) or water (W) was added to the inlet (I) or to barrel 4 (B) of the extruder and the MVR and endcap were determined.

| Table 2 | | | | | | | | | |
|---|---|---|---|---|---|---|---|---|---|
| Example | 5 | 6 | 7 | 8 | 9 | 10 | 11 | 12 | 13 |
| Extruder addition point | I | I | B | B | I | I | I | I | B |
| Chain Scission agent | P | P | P | P | W | W | W | W | W |
| Initial endcap (%) | 74 | 74 | 74 | 69 | - | - | - | - | 65 |
| Flow rate (mol/h) | 2.07 | 4.14 | 2.07 | 4.14 | 2.00 | 4.00 | 4.00 | 11.7 | 11.7 |
| Endcap (%) | 68 | 64 | 69 | 65 | - | - | - | - | 60 |
| MVR ($cm^3$/10 min) | 28 | 62 | 32 | 45 | 12 | 40 | 16 | >200 | 23 |

Table 2 shows that adding water or phenol to a melt polycarbonate results in an increase in MVR. This increase in MVR corresponds to a decrease in molecular weight. Table 2 further shows that adding phenol or water resulted in a decrease in the endcap level.

Set forth below are some embodiments of the continuous melt polymerization process provided by the instant invention.

Embodiment 1: a continuous melt polymerization process comprises melt polymerizing a carbonate compound and dihydroxy compound in the presence of a catalyst composition to form a polymerized polycarbonate, wherein the catalyst composition comprises an alpha catalyst and/or a beta catalyst; after a final polymerization, adding a chain scission agent to the polymerized polycarbonate to reduce a molecular weight of the polymerized polycarbonate to form a modified polycarbonate having a molecular weight that is less than the molecular weight of the polymerized polycarbonate wherein the modified polycarbonate has a branching level that is the same or lower than a branching level of the polymerized polycarbonate.

Embodiment 2: The process of embodiment 1, wherein the polymerized polycarbonate has a weight average molecular weight of greater than 50,000 Daltons based on a polystyrene standard.

Embodiment 3: the process of Embodiments 1 or 2, further comprising monitoring the molecular weight of the

modified polycarbonate with a controller and wherein the controller automatically adds an amount of the chain scission agent based upon a monitored modified polycarbonate molecular weight and the desired molecular weight.

Embodiment 4: the process of any of Embodiments 2-3, wherein the desired molecular weight is based upon an intended use of the modified polycarbonate.

Embodiment 5: the process of any of Embodiments 1-4, wherein the chain scission agent comprises a carbonate source, water, an aryl alcohol, or a combination comprising one or more of the foregoing.

Embodiment 6: the process of any of Embodiments 1-5, wherein the chain scission agent comprises a diaryl carbonate, p-hydroxy benzonitrile, paracumyl phenol, p-tert-butyl phenol, dicumyl phenol, methyl phenyl carbonate, dimethyl carbonate, diethyl carbonate, ethyl phenyl carbonate, phenol, or a combination comprising one or more of the foregoing.

Embodiment 7: the process of any of Embodiments 1-6, wherein the chain scission agent comprises diphenyl carbonate, di-p-tert-butyl phenol carbonate, di-paracumyl phenol carbonate, di-dicumyl phenol carbonate, bismethyl salicyl carbonate, di-p-hydroxy benzonitrile carbonate, or a combination comprising at least one of the foregoing, specifically, the chain scission agent comprises diphenyl carbonate.

Embodiment 8: the process of any of Embodiments 1-7 , further comprising adding a quenching agent to the modified polycarbonate after adding the chain scission agent.

Embodiment 9: the process of any of Embodiments 1-8, further comprising splitting the polymerized polycarbonate into greater than or equal to two streams; and wherein the chain scission agent is added to at least one of the streams.

Embodiment 10: the process of Embodiment 9, wherein a second modified polycarbonate is produced having a different molecular weight than the modified polycarbonate.

Embodiment 11: the process of any of Embodiments 1-106, wherein the modified polycarbonate is an optical grade polycarbonate having a light transparency of greater than 90% as determined using 3.2 mm thick samples using ASTM D1003-00, Procedure B using CIE standard illuminant C, with unidirectional viewing.

Embodiment 12: the process of any of Embodiments 1-11, wherein the polymerized polycarbonate has a weight average molecular weight of greater than 50,000 Daltons based on a polystyrene standard.

Embodiment 13: the process of any of Embodiments 1-12, wherein the polymerized polycarbonate has a weight average molecular weight of greater than or equal to 56,000 Daltons based on a polystyrene standard.

Embodiment 14: the process of any of Embodiments 1-139, wherein the modified polycarbonate has a weight average molecular weight of less than or equal to 45,000 Daltons based on a polystyrene standard.

Embodiment 15: the process of any of Embodiments 1-14, wherein the catalyst comprises a beta catalyst and the beta catalyst comprises tetraphenyl phosphonium acetate, tetraphenyl phosphonium phenoxide, or a combination comprising one or both of the foregoing.

Embodiment 16: the process of any of Embodiments 1-15, wherein prior to the final polymerization, carbonate is introduced only once.

Embodiment 17: the process of any of Embodiments 1-16, wherein the polymerized polycarbonate has an endcap level of greater than or equal to 60%.

Embodiment 18: the process of Embodiment 17, wherein the end cap level is greater than or equal to 70% or greater than or equal to 75%.

Embodiment 19: the process of Embodiment 18, wherein the end cap level is greater than or equal to 80%.

Embodiment 20: the process of any of Embodiments 1-19, wherein the catalyst comprises a beta catalyst and the beta catalyst comprises tetraphenyl phosphonium acetate.

Embodiment 21: the process of any of Embodiments 1-20, further comprising adding a quencher composition after the addition of the chain scission agent, wherein the adding comprises mixing the quencher composition with the polymerized polycarbonate for a period of time of greater than or equal to 5 seconds prior to the addition to the polycarbonate of any reactive additive, wherein the reactive additive has a reactive OH group or reactive ester group.

Embodiment 22: the process of Embodiment 21, wherein the quencher composition comprises 1 to 10 ppm alkyl tosylate and/or 1 to 10 ppm phosphorous acid, based upon 100 parts of the modified polycarbonate.

Embodiment 23: the process of any of Embodiments 21-22, wherein the quencher composition is added at a pressure of greater than or equal to 2 bars.

Embodiment 24: the process of any of the preceding Embodiments, wherein the modified polycarbonate has an increase in endcapping level of greater than or equal to 3%, or greater than or equal to 5%, or greater than or equal to 10%, as compared to an endcapping level of the polymerized polycarbonate.

Embodiment 25: the process of any of Embodiments 1-24, wherein the chain scission agent comprises bis(4-nitrophenyl)carbonate, bis(2-chlorophenyl)carbonate, bis(4-chlorophenyl) carbonate, bis(methyl salicyl)carbonate, bis(4-methylcarboxylphenyl) carbonate, bis(2-acetylphenyl) carboxylate, bis(4-acetylphenyl) carboxylate, diphenyl carbonate, di-p-tert-butyl phenol carbonate, di-paracumyl phenol carbonate, di-dicumyl phenol carbonate, bismethyl salicyl carbonate, di-p-hydroxy benzonitrile carbonate), p-hydroxy benzonitrile, paracumyl phenol, p-tert-butyl phenol, dicumyl

phenol, methyl phenyl carbonate, dimethyl carbonate, diethyl carbonate, ethyl phenyl carbonate, phenol, a diol (for example, BPA), water, or a combination comprising one or more of the foregoing.

As used herein, when referring to "reactive" or a "reactive group", e.g., having a reactive $OH^-$ group or a reactive ester group, the reactivity is with respect to polycarbonate.

All ranges disclosed herein are inclusive of the endpoints, and the endpoints are independently combinable with each other (e.g., ranges of "up to 25 wt%, or, more specifically, 5 to 20 wt%", is inclusive of the endpoints and all intermediate values of the ranges of "5 to 25 wt%," etc.). "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the film(s) includes one or more films). Reference throughout the specification to "one embodiment," "another embodiment," "an embodiment," and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments. Disclosure of a narrower range or more specific group in addition to a broader range is not a disclaimer of the broader range or larger group.

## Claims

1. A continuous melt polymerization process comprising:

   melt polymerizing a carbonate compound and dihydroxy compound in the presence of a catalyst composition to form a polymerized polycarbonate, wherein the catalyst composition comprises an alkali catalyst comprising a source of alkali and/or alkaline earth ions and/or a quaternary catalyst; and
   after a final polymerization, adding a chain scission agent to the polymerized polycarbonate to reduce a molecular weight of the polymerized polycarbonate to form a modified polycarbonate having a desired molecular weight that is less than the molecular weight of the polymerized polycarbonate;
   wherein the modified polycarbonate has a branching level that is the same or lower than a branching level of the polymerized polycarbonate.

2. The process of Claim 1, wherein the polymerized polycarbonate has a weight average molecular weight of greater than 50,000 Daltons based on a polystyrene standard.

3. The process of any of Claims 1-2, further comprising monitoring the modified polycarbonate molecular weight with a controller and wherein the controller automatically controls an amount of the chain scission agent being added based upon a monitored modified polycarbonate molecular weight and the desired molecular weight.

4. The process of any of Claims 1-3, wherein the chain scission agent comprises a carbonate source, water, an aryl alcohol, or a combination comprising one or more of the foregoing.

5. The process of any of Claims 1-4, wherein the chain scission agent comprises a diaryl carbonate, methyl phenyl carbonate, dimethyl carbonate, diethyl carbonate, ethyl phenyl carbonate, phenol, or a combination comprising one or more of the foregoing.

6. The process of any of Claims 1-5, wherein the modified polycarbonate is an optical grade polycarbonate having a light transparency of greater than 90% as determined using 3.2 mm thick samples using ASTM D1003-00, Procedure B using CIE standard illuminant C, with unidirectional viewing.

7. The process of any of Claims 1-6, wherein the catalyst comprises a quaternary catalyst and the quaternary catalyst comprises tetraphenyl phosphonium acetate, tetraphenyl phosphonium phenoxide, or a combination comprising one or both of the foregoing.

8. The process of any of Claims 1-7, wherein the polymerized polycarbonate has a weight average molecular weight of greater than or equal to 56,000 Daltons based on a polystyrene standard.

9. The process of any of Claims 1-8, wherein the modified polycarbonate has a weight average molecular weight of less than or equal to 45,000 Daltons based on a polystyrene standard.

10. The process of any of Claims 1-9, further comprising adding a quencher composition after the addition of the chain scission agent, wherein the adding comprises mixing the quencher composition with the polymerized polycarbonate for a period of time of greater than or equal to 5 seconds prior to the addition to the polycarbonate of any reactive additive, wherein the reactive additive has a reactive OH group or reactive ester group, and wherein the quencher composition is added at a pressure of greater than or equal to 2 bars.

**Patentansprüche**

1. Kontinuierlicher Schmelzpolymerisationsvorgang, umfassend:

   Schmelzpolymerisieren einer Carbonatverbindung und einer Dihydroxyverbindung in der Gegenwart einer Katalysatorzusammensetzung, um ein polymerisiertes Polycarbonat auszubilden, wobei die Katalysatorzusammensetzung einen Alkalikatalysator umfasst, der eine Quelle von Alkali- und/oder Erdalkaliionen und/oder einen quaternären Katalysator umfasst; und
   nach einer endgültigen Polymerisation Zugeben eines Kettenspaltungsmittels zu dem polymerisierten Polycarbonat, um ein Molekulargewicht des polymerisierten Polycarbonats zu reduzieren, um ein modifiziertes Polycarbonat mit einem gewünschten Molekulargewicht auszubilden, das weniger ist als das Molekulargewicht des polymerisierten Polycarbonats;
   wobei das modifizierte Polycarbonat ein Verzweigungsniveau aufweist, das dasselbe oder niedriger als ein Verzweigungsniveau des polymerisierten Polycarbonats ist.

2. Vorgang nach Anspruch 1, wobei das polymerisierte Polycarbonat ein gewichtsgemitteltes Molekulargewicht von mehr als 50.000 Dalton basierend auf einem Polystyrolstandard aufweist.

3. Vorgang nach einem der Ansprüche 1-2, ferner umfassend das Überwachen des Molekulargewichts des modifizierten Polycarbonats mit einer Steuervorrichtung und wobei die Steuervorrichtung automatisch eine Menge des Kettenspaltungsmittels steuert, die basierend auf einem überwachten Molekulargewicht des modifizierten Polycarbonats und dem gewünschten Molekulargewicht zugegeben wird.

4. Vorgang nach einem der Ansprüche 1-3, wobei das Kettenspaltungsmittel eine Carbonatquelle, Wasser, ein Arylalkohol oder eine Kombination umfasst, die eine/einen oder mehrere der Vorstehenden umfasst.

5. Vorgang nach einem der Ansprüche 1-4, wobei das Kettenspaltungsmittel ein Diarylcarbonat, ein Methylphenylcarbonat, ein Dimethylcarbonat, ein Diethylcarbonat, ein Ethylphenylcarbonat, ein Phenol oder eine Kombination umfasst, die ein oder mehrere der Vorstehenden umfasst.

6. Vorgang nach einem der Ansprüche 1-5, wobei das modifizierte Polycarbonat ein Polycarbonat von optischer Qualität ist, das eine Lichttransparenz von mehr als 90 % aufweist, wie unter Verwendung von 3,2 mm dicken Proben unter Verwendung von ASTM D1003-00, Verfahren B unter Verwendung von CIE Standard Lichtart C mit unidirektionaler Betrachtung bestimmt.

7. Vorgang nach einem der Ansprüche 1-6, wobei der Katalysator einen quaternären Katalysator umfasst und der quaternäre Katalysator Tetraphenylphosphoniumacetat, Tetraphenylphosphoniumphenoxid oder eine Kombination umfasst, die eines oder beide der Vorstehenden umfasst.

8. Vorgang nach einem der Ansprüche 1-7, wobei das polymerisierte Polycarbonat ein gewichtsgemitteltes Molekulargewicht von mehr als oder gleich 56.000 Dalton basierend auf einem Polystyrolstandard aufweist.

9. Vorgang nach einem der Ansprüche 1-8, wobei das modifizierte Polycarbonat ein gewichtsgemitteltes Molekulargewicht von weniger oder gleich 45.000 Dalton basierend auf einem Polystyrolstandard aufweist.

10. Vorgang nach einem der Ansprüche 1-9, ferner umfassend das Zugeben einer Quencherzusammensetzung nach der Zugabe des Kettenspaltungsmittels, wobei das Zugeben das Mischen der Quencherzusammensetzung mit dem polymerisierten Polycarbonat für einen Zeitraum von mehr oder gleich 5 Sekunden vor der Zugabe des Polycarbonats

eines beliebigen reaktiven Zusatzmittels umfasst, wobei das reaktive Zusatzmittel eine reaktive OH-Gruppe oder eine reaktive Estergruppe aufweist und wobei die Quencherzusammensetzung bei einem Druck von mehr als oder gleich 2 Bar zugegeben wird.

## Revendications

1. Procédé de polymérisation par fusion continue comprenant :

   la polymérisation par fusion d'un composé carbonate et d'un composé dihydroxy en présence d'une composition catalytique pour former un polycarbonate polymérisé, dans lequel la composition catalytique comprend un catalyseur alcalin comprenant une source d'ions alcalins et/ou alcalino-terreux et/ou un catalyseur quaternaire ; et
   après une polymérisation finale, l'addition d'un agent de scission de chaîne au polycarbonate polymérisé pour réduire un poids moléculaire du polycarbonate polymérisé pour former un polycarbonate modifié présentant un poids moléculaire souhaité qui est inférieur au poids moléculaire du polycarbonate polymérisé ;
   dans lequel le polycarbonate modifié présente un niveau de ramification qui est identique ou inférieur à un niveau de ramification du polycarbonate polymérisé.

2. Procédé selon la revendication 1, dans lequel le polycarbonate polymérisé présente un poids moléculaire moyen en poids supérieur à 50 000 Daltons sur la base d'un étalon polystyrène.

3. Procédé selon l'une quelconque des revendications 1 à 2, comprenant en outre la surveillance du poids moléculaire du polycarbonate modifié avec un régulateur et dans lequel le régulateur régule automatiquement une quantité de l'agent de scission de chaîne qui est ajoutée sur la base d'un poids moléculaire de polycarbonate modifié surveillé et du poids moléculaire souhaité.

4. Procédé selon l'une quelconque des revendications 1 à 3, dans lequel l'agent de scission de chaîne comprend une source de carbonate, de l'eau, un alcool arylique, ou une combinaison comprenant un ou plusieurs des éléments susdits.

5. Procédé selon l'une quelconque des revendications 1 à 4, dans lequel l'agent de scission de chaîne comprend un carbonate de diaryle, un carbonate de méthyl phényle, un carbonate de diméthyle, un carbonate de diéthyle, un carbonate d'éthyl phényle, du phénol, ou une combinaison comprenant un ou plusieurs des éléments susdits.

6. Procédé selon l'une quelconque des revendications 1 à 5, dans lequel le polycarbonate modifié est un polycarbonate de qualité optique présentant une transparence à la lumière de plus de 90 % telle que déterminée au moyen d'échantillons de 3,2 mm d'épaisseur au moyen de la norme ASTM D1003-00, Procédure B au moyen de l'illuminant normalisé CIE C, avec une visualisation unidirectionnelle.

7. Procédé selon l'une quelconque des revendications 1 à 6, dans lequel le catalyseur comprend un catalyseur quaternaire et le catalyseur quaternaire comprend de l'acétate de tétraphényl phosphonium, du phénoxyde de tétraphényl phosphonium, ou une combinaison comprenant l'un ou les deux des éléments susdits.

8. Procédé selon l'une quelconque des revendications 1 à 7, dans lequel le polycarbonate polymérisé présente un poids moléculaire moyen en poids supérieur ou égal à 56 000 Daltons sur la base d'un étalon polystyrène.

9. Procédé selon l'une quelconque des revendications 1 à 8, dans lequel le polycarbonate modifié présente un poids moléculaire moyen en poids inférieur ou égal à 45 000 Daltons sur la base d'un étalon polystyrène.

10. Procédé selon l'une quelconque des revendications 1 à 9, comprenant en outre l'addition d'une composition d'extinction après l'addition de l'agent de scission de chaîne, dans lequel l'addition comprend le mélange de la composition d'extinction et du polycarbonate polymérisé pendant une période de temps supérieure ou égale à 5 secondes avant l'addition au polycarbonate de n'importe quel additif réactif, dans lequel l'additif réactif présente un groupe OH réactif ou un groupe ester réactif, et dans lequel la composition d'extinction est ajoutée à une pression supérieure ou égale à 2 bar.

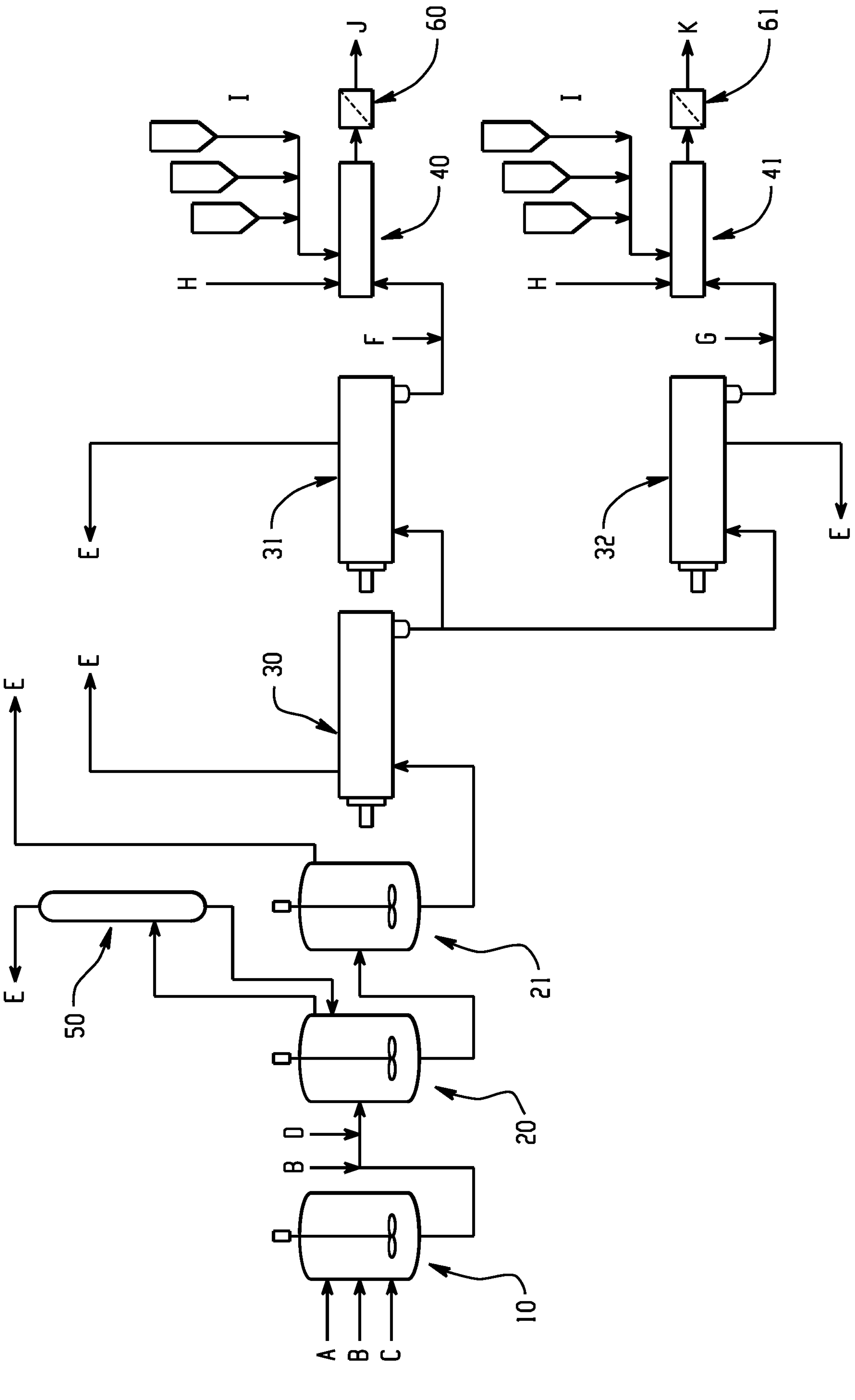
A
B
C
10
B
D
20
21
50
E
E
E
30
E
31
32
E
F
G
H
H
I
I
40
41
60
61
J
K

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2692766 A
- US 5414057 A
- EP 2540758 A